# EUROPEAN PATENT SPECIFICATION

(11) **EP 1 983 697 B1**
(45) Date of publication and mention of the grant of the patent: **30.03.2016**
(21) Application number: 07007705.2
(22) Date of filing: 16.04.2007
(51) Int. Cl.: H04L 12/701, H04W 80/04, H04L 12/721, H04L 12/707

(54) **Method for forwarding data of a data packet and device**
Verfahren zur Weiterleitung von Daten eines Datenpaketes und Vorrichtung
Procédé pour transmettre des données dans un paquet de données et dispositif

(43) Date of publication of application: 22.10.2008
(73) Proprietor: Nokia Solutions and Networks Oy, 02610 Espoo (FI)
(72) Inventor: Zhou, Di Dr., 1220 Wien (AT)
(74) Representative: Borgström, Markus

(56) References cited:
- WO-A-01/30034
- WO-A-01/69869
- WO-A-02/085046
- US-A1- 2003 067 914
- US-A1- 2004 264 380
- US-A1- 2005 083 936

## Description

The work leading to this invention has received funding from the European Community's Seventh Framework Programme FP 7 / 2007 - 2013 under grant agreement no. 027662.

The invention relates to a method for forwarding data of a data packet. The method comprises the receiving of a first data packet. The first data packet comprises a source identifier.

Especially, the data packet is an IP-data packet (Internet Protocol), that fulfills IETF (Internet Engineering Task Force), RFC 791 (Request for Comment). Thus, the data packet also comprises a destination IP-address that is used for forwarding the data of the data packet. This method of forwarding of IP-packets is well established for many years. The data in the data packet may comprise user data, for instance music data, speech data, video data, program data or telephone data.

From WO 01/30034 A2 a system for routing and switching in computer networks is known that utilizes a source switching mode using a local link identifier of a sending node for forwarding of a data packet.

WO 01/69869 A2 relates to a method for routing packet data in an ad hoc wireless communication system. A source port number is used for forwarding of the data packets.

US 2005/0083936 A1 discloses a method for scalable and dynamic traffic engineering in a data communication network. In case of sudden network load changes, rerouting is performed by changing a global path identifier associated

US 2004/0264380 A1 relates to distributing information across equal-cost paths in a network. A source IP address is used for load balancing.

US 2003/0067914 A1 relates to a method of providing network connection of data processing terminals. A source IP address is used for routing.

However, it is an object of the invention to give another method for forwarding IP-packets. Especially, the improved method should be more appropriate for mobile applications compared with the conventional method for forwarding.

This object is solved by a method according to claim 1. Embodiments are given in the sub-claims.

According to claim 1 the method comprises:
- using a source identifier of the data packet for forwarding the data of the data packet in a second data packet,
- creating for a flow a chain of bindings between pairs of source addresses and destination addresses from a first source device to a first destination device,
- changing at least one binding of the chain of bindings of the flow while maintaining at least one binding of the chain of bindings of the flow during the life time of a data stream that is modeled by the flow.

The main idea of this method is to use mainly the source address of a data packet for finding the next destination address. This allows a very flexible type of forwarding because no final IP-address has to be known at the sending device. It is sufficient that the sending device knows the destination address of the first intermediate device and that the first intermediate device knows the destination address of the second intermediate device and so on. The source address of the data packet may be used to find the next destination address in an intermediate device, for instance in the first intermediate device the destination address of the second intermediate device.

The technical effect of this method is that the forwarding is based only on a very restricted view in each device, namely only using IP addresses of neighboring devices but not the final IP-address of the destination user device. This restricted or local view is the basis for only small changes in the case that the source user device or the destination device is moving or changing. It is not necessary to change such parts of the route where no chance of the local views takes place.

The first data packet may comprise:
- the first source identifier that identifies the source of the first data packet, and
- a first destination identifier.
Furthermore, the method may comprise:
- determining a second destination identifier using the first source identifier, the second destination identifier being different from the first identifier.
The second destination identifier may be included in the second data packet for identifying the destination of the second data packet.

Note that the first and the second data packets mentioned above are basically the same data packet from user application points of view. They contain the same payload data.

The identifiers may be source addresses, especially IP addresses.

The second data packet may also comprise:
- a second source identifier that identifies the source of the second data packet,
- same user data than first data packet.

The first data packet may comprise:
- a further identifier that identifies a transmission flow to which the first data packet belongs.
The method may further comprise:
- determining the second destination address by using the first source identifier and the further identifier.

The further identifier allows to use more than one data flow between two user devices or more than two user devices. It is possible to forward these flows in different ways with regard to each other by using the further identifier. Examples of different flows are voice data, video data and control data of the same video telephone call.

The method may also comprise:
- determining a second further identifier using the first source identifier and the first further identifier.
The second data packet may comprise the second further identifier. Thus, the same principle of forwarding that is used for the IP-addresses is used for the further identifiers, i.e. only local views are used for the further identifiers. This has the technical effect that a great part of the local views remain valid if there is a change and/or move of the source user device and/or of the destination user device.

The method may be performed in at least two devices, in at least five devices or in at least ten devices along the path of which the data of the data packet is forwarded in the data flow. Although there are only two sides of the flow that may be move and/or change there may be much more than two intermediate devices that perform the method.

A chain of bindings may be created between pairs of source addresses and destination addresses for a data flow from a first source device to a first destination device. This method relates to a second aspect, i.e. flow establishment, and can also be performed independently of the method according to the first aspect described above. Again the source addresses and the destination addresses may be IP-addresses. The word "chain" relates here to devices that form a sequence which is determined by the pairs of bindings. For instance, a destination address of a first device may be used in a first binding pair. A source address of the first device may be used then in a second binding pair or in the next binding pair together with the destination address of a second device. Then, a source address of the second device may be used in a third binding pair together with the destination address of a third device and so on. The first binding pair, the second binding pair and the third binding pair may be stored in the first device, in the second device and in the third device, respectively.

The method according to the second aspect may comprise:
- in a second device receiving a first message from a first device,
the first message comprising:
- a source address of the first device,
- a destination address identifying a device that is different from the second device,
the method comprises further:
- in the second device due to the first message initiating the creation of a binding between the source address of the first device and the destination address of a third device.

The second aspect relates to the establishment of a flow that is used according to the first aspect for forwarding of data. Thus, there is a close relation between both aspects. The considerations and technical aspects of the first aspect are also valid for the second aspect.

The method may also comprise:
- sending a second message from the second device to a third device due to the first message,
the second message comprising:
- a source address of the second device, and
- the destination address identifying the device that is different from the second device.

The second message may be a query message to get data in the second device to complete a binding, especially a binding pair of IP-addresses. The second message may further initiate the creation of a further binding in the third device.

The method may comprise:
- in response to the second message receiving a third message from the third device in the second device,
the third message comprising:
- a source address of the third device, and
- a destination address of the second device. The destination address has the same value as the source address of the second device.
Thus, the third message may be used to create the binding in the second device.

The method of the second aspect may also comprise:
- sending a response message from the second device to the first device in response to the first message,
the response message comprising:
- a source address of the second device, and
- a destination address of the first device. The destination address has the same value as the source address of the first device.

This response message may be used to create a binding in the first device between a source address of another device and the destination address of the second device, i.e. both devices are different from the first device. Otherwise, if the first device is a source device for a data flow, then there may be stored a binding between a flow coming from an application and the destination address of the second device in the first device. It is,for instance, possible to use a flow identifier or the final destination address of the flow for that purpose.

The chain of bindings may be created beginning at the first source device. Then, the chain of bindings may be completed step by step creating the bindings in the intermediate devices. The sequence of creating the bindings may correspond to the sequence in which the data of the data flow will be forwarded by the intermediate devices.

A second chain of bindings may be created between pairs of source addresses and destination addresses from the first destination device to the first source device. Furthermore, the second chain of bindings may be created beginning at the source device. Then, the second chain of bindings may also completed step by step creating the bindings in the intermediate devices. The sequence of creating the bindings may correspond to the sequence in which the data of the downstream data flow will be forwarded by the intermediate devices. Thus, there is the same route for upstream signaling as for data forwarding in downstream direction. If there is an upstream data flow it can use the second chain of bindings. Alternatively, another route can be established for this up-stream data.

The method may comprise:
- using buffers in intermediate devices to store a pair of a source address and of a destination address of the second chain of bindings, and
- copying the content of the buffer to an upstream routing table after a source address is known that is used for forwarding along the second chain of bindings.

Thus, the complete address in the upstream routing table can only be computed if the source address of a downstream intermediate device is known as seen from the respective intermediate device that uses the buffer. It is not possible to compute the complete address before.

The method may further comprise:
- sending a data packet after the source address is known, the data packet comprising at least one of the following:
- an identifier that is used to find an entry in a routing table of the second chain of bindings,
- an upstream identifier identifying a buffer which is used to create a second chain of bindings.
For all embodiments of the second aspects all downstream messages for flow establishing may comprise a RAO (Router Alert Option), preferably of the same value, see RFC 2113 for IPv4 (Internet Protocol version 4) and RFC 2711 for IPv6. The advantage of using the router alert option is minimal overhead in processing the data packets. Alternatively, other methods are possible instead of using the router alert option. "Downstream" relates here to the transmission direction from the source device to the destination device. The downstream messages may be sent by GIST (General Internet Signaling Transport). The upstream messages may be sent by UDP (User Datagram Protocol)

Furthermore, all messages for flow establishment may comprise a further identifier that identifies a flow between the same devices if there is more than one flow between these devices. Thus, it is possible to use different flows that may be transmitted via different routes and different sub-flows.

A special identifier may be used to indicate the last sub-flow, i.e. the flow to the final destination device. It is not necessary to indicate different sub-flows at the IP-layer with regard to the last sub-flows because higher layers of the destination device can also do this.

Furthermore, an identifier may be used, for instance F, to find pairs of query/response messages. Other methods may be also used for this purpose, especially higher layers can be used for this purpose.

The bindings created by the method of the second aspect may be used for determining the second destination identifier during the method of the first aspect. The method of the second aspect is therefore performed especially before the method of the first aspect, i.e. before receiving the first data packet.

The method of the second aspect may comprise for supporting mobile IP:
- changing at least one binding of the flow while maintaining at least one binding of the flow.

This means that there is a part of the flow that is maintained despite of the change of bindings in the same flow. If there is a next change of bindings then it is possible to maintain another part of the flow and to change the part that was maintained during the first change.

The changing may be necessary due to at least one of the following:
- a change from the first source device to a second source device,
- a move of the first source device,
- a change from the first destination device to a second source device,
- a move of the first destination device.
In all four cases there may be a change in the IP address of the source device or the destination device too.

Each binding may be stored in a different device or node and may comprise:
- the source address of a device that sends data of the data flow to the device that stores the pair, and
- the destination address of a device that receives data of the flow from the device that stores the pair.

The method with changing of bindings may comprise:
- modifying the chain of bindings at the side of the destination device using the same method as for establishing the chain of bindings with the differences that:
- an intermediate device for forwarding the flow is used instead of the first source device. The intermediate device initiates the establishment of the modified part of the chain of bindings.
- a new destination address is used instead of the original destination address of the data flow.

This method uses the steps of flow establishment again. Thus, the same implementations may be used with only slight changes.

The method for changes at the destination side may comprise:
- sending a signaling message from the first destination device or from a second destination device that should be used instead of the first destination device,
the signaling message comprising:
- a new destination address of the data flow.

This enables the intermediate node to initiate the change of bindings or to process the change of bindings by itself. The second chain of bindings may be used to determine the destination address of the signalling message.

The method may further comprise:
- after receiving the signaling message in a receiving device checking if the receiving device is the appropriate device for redirecting the flow to the new destination address. If the receiving device is the appropriate device it starts with the updating of the bindings. If the intermediate device is not the appropriate device it may forward the signaling message to the next upstream device and delete its old bindings relevant to the changing flow.

Alternatively, the method may comprise:
- modifying the chain of bindings at the side of the source device using the same method like for establishing the chain of bindings with the differences that:
- the flow is originated at a device with a new source address, and
- the address of an intermediate device for forwarding the data flow is used as a destination address instead of the original destination address of the flow.

This method uses also the steps of flow establishment again. Thus, the same implementations may be used with only slight changes.

The method for changes at the source side may comprise:
- sending a signaling message from the first source device or from a second source device that should be used instead of the first source device,
the signaling message comprising:
- a new source address of the data flow.

Thus, the new source IP-address may be become known to the intermediate devices step by step beginning with the first intermediate device in downstream direction.

The method may comprise:
- after receiving the signaling message in a receiving device checking if the receiving device is the appropriate device for receiving and forwarding the flow from the new source address. If the intermediate device is not the appropriate device it forwards the signaling message to the next downstream device and deletes the old bindings.

The method for a change at the source device side may also comprise:
- sending a signaling message from an intermediate device to the first source device or to the second source device to initiate flow establishment to the intermediate device. This enables to establish the flow always from the source device, i.e. in downstream direction. The technical effect of this is the optimal selection of a route for the data flow also in cases with different optimal routes for downstream and upstream data. This is also valid for a change at the destination device side.

The source identifier may be an IP-address. The IP-layer is a layer above the data link layer, for instance above an Ethernet-layer or an ATM-layer. A transport layer is above the IP-layer. The transport layer may be based on TCP, UDP or another appropriate protocol. The use of the source identifiers for routing in the IP-layer results in easier processing for mobile IP and may be the basis for new applications.

The source identifier, a destination identifier and a flow identifier of the first data packet may be replaced for forwarding. Replacing can be achieved with hardware very fast. Replacing is more efficient if the data fields are arranged without intermediate data fields in a sequence. According to the IP-protocol this is the case for the source identifier and the destination identifier.

Furthermore, a device is given for forwarding data of a data packet. The device comprises:
- a receiving unit, especially for receiving IP-packets,
- a sending unit, especially for sending IP-packets,
- and a control unit.
The control unit performs a method according to the first aspect or according to the second aspect. Thus, the same technical effects as stated above are valid for the device. The device may be a source user device, an intermediate device, for instance a router, or a destination user device.

As far as "may" is used in this application, this term shall have the meaning of an actual embodiment and/or also the technical possibility of doing so. The appending figures are for illustrative purposes only and are not intended to limit the scope of the invention. In the following some embodiments of the invention are described with reference to the figures, wherein:
- Figure 1: illustrates an IP network for transmitting a first data flow,
- Figure 2: illustrates the IP network after redirecting the data flow,
- Figure 3: illustrates a downstream routing table used for forwarding the data flow,
- Figure 4: illustrates an upstream routing table,
- Figure 5: illustrates a first part of a flow establishment,
- Figure 6: illustrates a second part of the flow establishment,
- Figure 7: illustrates a third part of the flow establishment,
- Figure 8: illustrates payload forwarding,
- Figure 9: illustrates flow redirection at the destination side, and
- Figure 10: illustrates flow redirection at the source side.

In the following a flow centric addressing in IP networks will be described. The flow centric addressing is an innovative approach which optimises seamless mobile data streams. Mobile telecommunication is penetrating into, influencing and changing every aspect of our daily life and business. It becomes more and more clear that diverse IP networking technologies based on the principles of packet switching are and will be dominating the world of telecommunication in a very long period. Many typical applications running over IP networks rely on the smooth and fault-free transportation of various kinds of data streams. Examples of data stream transportation over IP networks can be found everywhere, for instances file downloading, online and/or on-demand TV or radio, audio/video telephony, etc. This paper deals especially with streams flowing exclusively between two end points, i.e. no multicasting or broadcasting. During the whole life time of a data stream, both of its two end points can move or even change (the exact descriptions will be given below). For instance, a person is walking in a train to a different carriage while downloading a film to his PAD (Personal Assisting Device) from the laptop of another person walking in another train between different carriages. This is an example of "move" - the trains are moving and the persons are moving in the trains, but the two end point entities remain the same. Sometimes it is necessary to change even the end point entities of an existing data stream. For instance, a person leaving home may instruct the video equipment in his car to take over an on-going online film from the fixed TV equipment in his living room. The concepts and the approaches of "network compositions" which are being developed in EU (European Union) FP6 (Frame Program) Integration Project Ambient Networks and standardized in 3GPP (TR 22.980), enable more dynamic cooperation between different kinds of autonomous networks and make it possible for control functions and applications of a network to take over the tasks of the other control functions and applications of another network online and dynamically, which may lead to more frequent end point changes of living or continuous data streams.

According to the teaching of this document data streams are modeled by the concept of "flows". A flow refers also to all data packets transported from a source end point to a destination end point in the same context. The end points of a flow are generic computing entities (e.g. network nodes, control functions or customer applications) which may move or even change during the whole life time of that flow. "Moving an end point" means here a change of the current locator of this end point, e.g. a mobile node switches to a new CoA (Care of Address), when MIP (Mobile IP, RFC 3344, RFC 3775) is used. "Changing an end point" means a change of the end point itself, e.g. an application with a different HI (Host Identifier) takes over the flow being processed by another application with another HI, when HIP (Host Identifier Protocol, "RFC" 4423) is used. Allowing changes of flow end points may lead to new security attacks. In principle a flow can be protected against this kind of attack by some flow-specific secrete shared by the flow itself and its end points. The detailed security related discussion is out of the scope of this paper.

A lot of researches have been and are being done in solving the mobility issues related to flows in IP networking environment. But almost all of the solutions proposed are based on end-to-end address updates of the IP address of the flow end points, e.g. diverse solutions based on MIP, HMIP (Hierarchical MIP, RFC 4140) or HIP. A more detailed analysis can be found below. When HIP is used, although the continuity of flows may be ensured from the point of view of control entities and applications running at or above the data transportation layer when end points move, there is no continuity of flows at the network layer (IP layer). Every time when the locator, i.e. the IP-address, of an end point of a flow changes, all the signaling/routing states established for the corresponding existing flow have to be cleared and the required states have to be newly established. This may lead to a performance blackout of minutes, especially greater than 30 seconds, which is not always acceptable for some performance sensitive applications. The flow continuity in the cases of changes of end points are not even enabled in the layers above the IP-layer.

Since both end points of a flow can move or even change concurrently, all the solutions based on end-to-end address-updates need some third-party help-service from the background infrastructure which does not move or change and is well known for all computing entities of potential flow end points. It is not really reasonable to require the existence of such infrastructure help-services in all possible networking environments, e.g. ad hoc networks, personal area networks and body area networks, and communicating with such infrastructure help-services results in general loss of performance and resources. More related analysis concerning MIP, HMIP and HIP can be found below.

The main reason for the drawbacks of MIP, HMIP, HIP and all other related researches is to handle only end points of flows but not the flows themselves. As described above, the existence of a flow can be, in many cases, independent of its current end points (in the sense of locators or even identifiers). During the whole life time of a flow, its end points may move, i.e. change of locators, or even change, i.e. change of identifiers. This paper presents the concepts of and the basic approaches based on flow-centric addressing in the IP networks. This eliminates the requirement to any infrastructural third-party service and minimizes the performance degrading of a flow when its end points move or change. The concepts and ideas are introduced to meet the related requirements of performance sensitive and very mobile applications to complement the existing solutions like MIP, HMIP and HIP.

In the scope of the on-going EU (European Union) FP6 (Framework Program) Integration Project Ambient Networks we have identified the urgent need for a mobility solution general for IP networks, which overcomes the two main drawbacks - long performance blackout and requirement to infrastructure help - of current solutions. This paper proposes the concepts and the basic approaches of flow-centric addressing in IP networks meeting this need.

Mobile. IP (MIP) is probably the most famous solution proposed by IETF to enable mobile telecommunication over IP networks. To set up a data connection to a moving node (MN) with MIP, a source node sends the connection request to the permanent home-address (HoA) of that MN which will then be caught by the home agent (HA) of the MN and forwarded to its current care-of-address (CoA). To avoid unnecessary expensive detour over the HA after the connection establishment phase, a connection between an MN and the related correspondent node (CN) can be optimized so that the data packets are exchanged directly between the MN and the CN without involving the related HAs. Each time when a MN gets a new CoA it has to inform both its HA and all its current CNs, where the dynamic binding between its permanent home-address (HoA) and its current care-of-address (CoA) is maintained. As described before, there are two main weak points with regard to MIP related to the issues of performance and third-party support.

During the normal operation of an optimized data connection between a MN and one of its CNs, each time when the MN moves and gets a new CoA it has to send an address-update message to the CN to update the address-binding managed there. After getting this address-update message, the CN uses the new different CoA to send data packets to the MN. To send data packets to a different destination IP-address means in principle to set up a new data connection. Even when the new destination IP-address is very near to the old one, the routing and the other signaling states established for the old data connection bound to the old destination IP-address cannot be directly reused. To repeat the signaling processes to establish the new routing and other signaling states along the whole path from the CN to the MN may cause some serious performance problems which cannot always be tolerated by some performance-sensitive applications.

The CN of a MN can be another MN, i.e. it can move too. The second serious issue of MIP relates to the processes of address-binding-update between two MNs connected by an optimized data connection. When the two MNs move at the same time and try to update each other concurrently using the old CoAs, neither of them can receive the address-binding-update message sent by the other one. In this case, some third-party infrastructure service is required which ensures that the address-binding-update messages can be forwarded to the corresponding MNs, even when their CoAs are changing. MIP has not yet provided any solution, although HAs can provide, in principle, such third-party services.

By introducing a mobility anchor point (MAP), hierarchical mobile IP (HMIP) reduces significantly the frequency of the processes of the address-binding-update of a MN at its HA and CNs. But it also introduces additional communication overhead. All data messages sent to an MN have to be routed to the MAP it currently attaches to which forwards them to its current regional-care-of-address (RCoA). This makes the MAP a fault-sensitive performance bottleneck of all the data packets sent to all MNs attaching to this MAP. The MAPs of HMIP are statically installed. Although there can be a lot of MAPs installed in the reachable area of an MN, the MN can attach only to one of them at a time. Suppose an MN is currently connected to CNs in all 4 directions - east, west, north and south. Although there could be MAPs installed in all these 4 directions, the MN can select and attach to only one of them, let us say the one in east. All the flows from the other three directions, i.e. west, north and south, have to take the detours across this MAP. This is why route-optimization is not avoidable in general with MHIP. Route-optimizations enable data packet deliveries directly between an MN and its CNs without involving the HAs or even both HAs and MAPs. By reducing the frequency of "remote" address-binding-updates, HMIP eases in general the problems related to performance and third-party support mentioned above, but does not eliminate them when diverse optimized data connections are considered.

By separating identifiers and the locators of the end points of a data connection, Host Identifier Protocol (HIP) ensures the continuity of a mobile data connection at the layers above the network layer (IP-layer). Applications running at the data transport layer and above always use the same identifiers (HITs - Host Identity Tag) to communicate with each other, even if their network layer locators (current IP-addresses) change. But at the IP-layer the problems remain basically the same. While the concept of "rendezvous servers" is introduced to provide a centralized solution to the issue of third-party services, the performance issue remains unattached.

The fundamental drawback of the current technologies, which leads to the serious issues related to performance blackout and third-party service in mobile data communication over IP-networks, is that at the IP-layer source end points have to address all user payload data packets they send with the current locators of the corresponding destination end points.

In fact, a flow as discussed above may be considered as a data stream flowing in a logical autonomous reconfigurable tunnel connecting two mobile end points. After the "tunnel" has been established, it is theoretically not necessary for an end point to know the current IP-address of the other end point. All the end point has to know is the local "entrance" or "exit" of the "tunnel" and all it has to do is to send related data packets to and to receive data packets from the "tunnel" and it does not care if the other end of the "tunnel" moves/changes or does not move/change. The "tunnel" ensures that all data will be correctly delivered from one end point to the other end point, no matter if the end points are moving/changing or not. When an end point of a "tunnel" moves/changes, it is not necessary for this end point to inform the other end point. All it has to do is to inform the "tunnel" about the movement of its local end point so that a possible minimal part of the "tunnel" can be rebuilt autonomously to connect the new end point to ensure the most efficient data delivery.

The following part of this paper presents the concepts of and the basic approaches based on flow-centric addressing in the IP networks, which eliminate the requirement of any third-party service and minimize the performance degrading of a flow when its end points move or change. The concepts and ideas are introduced to meet the related requirements of performance sensitive and very mobile applications to complement the existing solutions like MIP, HMIP and HIP.

### Principles and rationales

The fundamental ideas of the concept and the approach of flow-centric addressing are illustrated informally above. Instead of obliging end points to address each other at the network layer with their current locators in every data packet, this approach requests both the source end point and the destination end point of a data stream to address and to deal with only the local end of the related flow (the "tunnel") between them, without taking care of the movements and changes at the other end of the same flow. In this way the effect of the movement and change of an end point of a flow is limited and localized without influencing the normal operation at the other end point of the same flow. Since the effect and the requested modifications at an end point of a flow are most possibly localized and no change at the other end point of the same flow is required, the related performance degrading can be minimized. Since there is no need for the two end points of a flow to update each other to ensure correct address-bindings at each side anymore, there is no need to any third-party service to guarantee the rendezvous between the two moving or changing end points of the flow.

As defined above, a flow comprises all data packets transported from a source end point to a destination end point in the same context. In the following parts of this document the term "flow" is also used to refer to the paths along which the data packets of the flow are delivered hop-by-hop from its source end point to its destination end point.

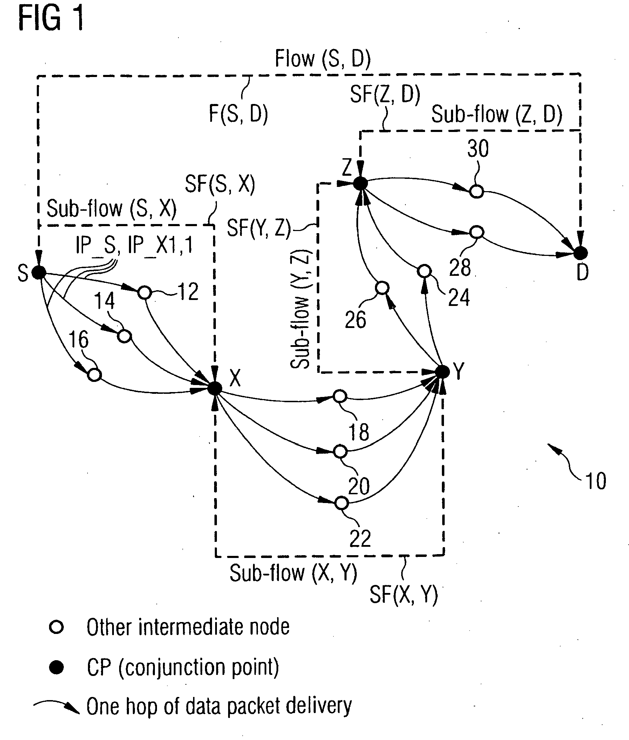

Figure 1 illustrates an IP network 10 for transmitting a first data flow F(S, D). As illustrated in Figure 1, the different data packets of one and the same flow F(S, D) may travel hop-by-hop along different routes and intermediate nodes 12 to 30 from the source end point, e.g. S, to the destination end point, e.g. D, in the IP-network 10. All these routes meet at some common points or routers, e.g. X, Y and Z, between the two end points S, D where the routing and the other signaling states of the whole flow F(S, D) are established, monitored and maintained. These points are called "conjunction points (CPs)" in this document. The two special CPs of a flow are its two end points S and D.

The groups of the sub-routes along which data packets of a flow are delivered between two neighboring CPs are called "sub-flow". A flow consists of a sequence of concatenated sub-flows. For instance, in the graphic below, the flow F(S, D) consists of sub-flows SF(S, X), SF(X, Y), SF(Y, Z) and SF(Z, D).

It is possible, of course, that there are more than two hops in a sub flow or that there is only one hop in a sub-flow. Furthermore, there may be only one route for one sub-flow or there may be more than one route.

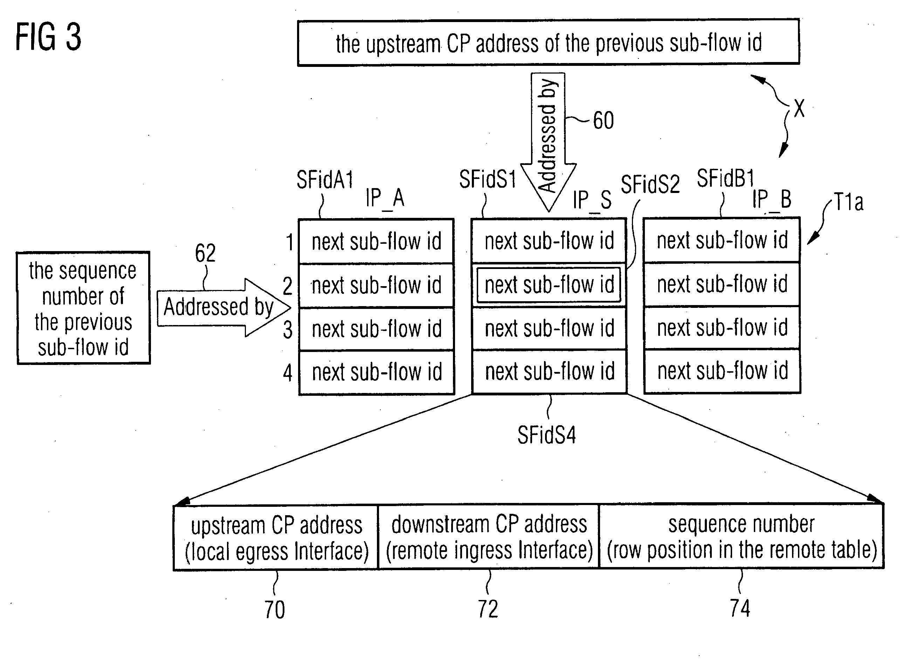

The first sub-flow SF(S, X) has, for instance, an identifier "IP_S, IP_X1, 1". This is explained in more detail below with reference to Figure 3.

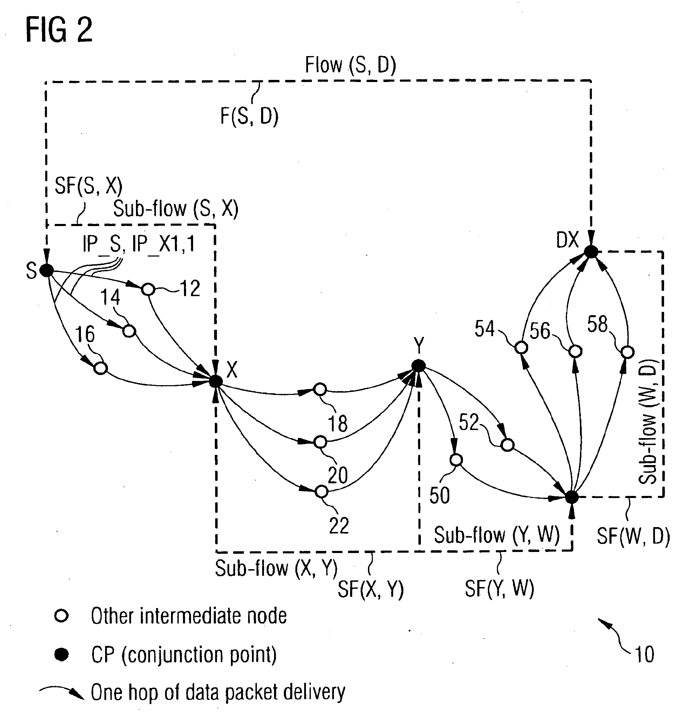

As shown in Figure 2, when an end point of a flow moves or changes, only the sub-flows nearest to that end point have to be rebuilt. It is not necessary to always rebuild the whole flow F(S, D) completely from the other end point. For instance, when the end point D moves or changes, it may inform the conjunction point Z about its new locator. Since Z does not move, it is always reachable from D and there is no need to any third-party help. Z checks in this case if it is the optimal point to rebuild the connection to D, i.e. a sequence of one or many concatenated new sub-flows connecting Z and D. If Z is the optimal point, it starts the required signaling process immediately to establish a new connection to the end point D. Otherwise, it forwards the request to the next CP, i.e. Y. This procedure is repeated until the required new connection is built from one of the CPs, which is as near as possible to the end point D. This approach seems optimal and easy. But it cannot be directly implemented in an IP network, since it is required in the IP-network that every data packet sent by the source end point has to contain the current address of its final destination end point, e.g. every packet containing payload user data sent by the end point S has to be addressed directly with the current IP-address of the end point D. This requires end-to-end address-binding-updates and complete reestablishments of signaling states between the two end points of a flow, every time when end points move or change. This leads to the problems related to performance blackout and third-party rendezvous-service.

### Flow and sub-flow identifiers

As shown in Figure 3, the concept and the approach of flow-centric addressing enable an end point of a flow to address the flow, more exactly, the nearest sub-flow of the flow, instead of the other end point at the other end of the flow. To avoid unnecessary scalability issues and to improve routing efficiency a flow is identified by the identifiers of all its sub-flows. The identifier of a sub-flow, for instance, SFidS4 consists of three parts:
1. the effective locator 70 of the upstream CP, i.e. the CP from which the sub-flow begins;
2. the effective locator 72 of the downstream CP, i.e. the CP at which the sub-flow ends and
3. a sequence number 74 with which the sub-flow is uniquely identified among all the sub-flows of one flow or of more than one flow existing concurrently between the upstream and downstream CPs of the same flow.

In an IP-network the identifier of a sub-flow is a triple consisting of two IP-addresses and a sequence number. The length of an IP-address is fixed. A sequence number with sixteen bits should be long enough to distinguish all possible concurrent sub-flows between an upstream CP and downstream CP of the same sub-flow. In fact, the IP-addresses of the upstream CP and the downstream CP correspond to the source and the destination IP-addresses in a normal IP data packet transmitted between these two CPs. Only the sequence number has to be carried additionally as an optional data.

### Routing at CPs

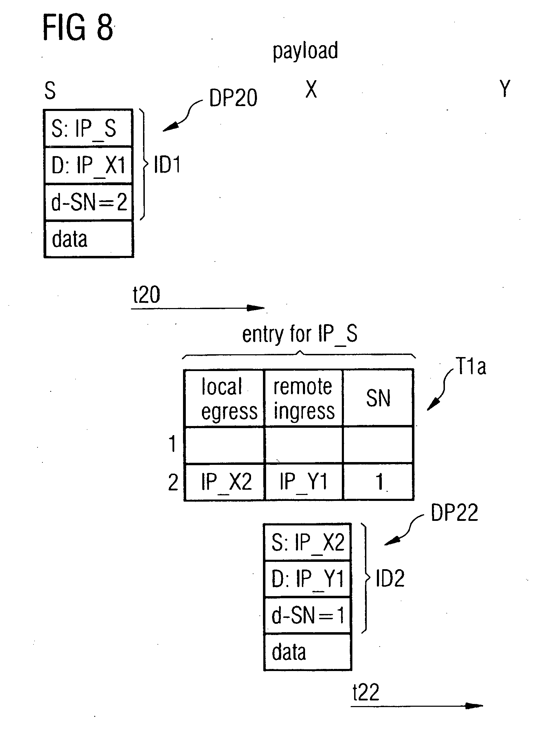

Instead of sending the user payload data packets directly with the IP-address of the destination end point of the flow, the source end point sends all the data packets with the identifier of the next sub-flow of the flow, i.e. its own IP-address as the source IP address of the data packets, the IP-address of the next downstream CP as the destination address of the data packets and the sequence number in an optional data field. The data packets will be delivered autonomously by the underlying IP-network to the next downstream CP, where the identifier of the next sub-flow is found, e.g. in a table, according to the IP-address of the upstream CP and the sequence number. The data packets are then forwarded with the identifier of the next sub-flow. This procedure repeats at every CP until the data packets arrive at the destination end point. Taking the flow shown in the graphic above as an example, the data packets sent by S are addressed to X, then readdressed to Y at X, to Z at Y and at last to D at Z. This process is described in more detail below with reference to Figure 8.

Since the routing procedure at each CP is very simple and straightforward, it can be directly implemented in hardware and this makes the routing at CPs as efficient as normal IP routings. The details of the related processes and mechanisms can be found in the corresponding section in the chapter "Processes and mechanisms".

### Flow establishment

There are basically two possibilities to determine the optimal route from the source end point to the destination end point of a flow and all the involved CPs. The first one is to handle all CP-capable nodes as an overlay and to calculate the optimal route only at this overlay. The second one is to rely only on the routing capability of the underlying IP network. This paper only deals with the second possibility.

The basic approach of the flow establishment proposed in this paper is to use the router alert option (RAO) specified in IETF RFC 2113 or in RFC 2711 to find and to signal all the involved CPs step-by-step. Of course, it is possible to use other methods instead of RAO. It is natural that before a flow is successfully established the source end point S has to dig out somehow the current IP-address of the destination end point D. To establish the flow the source end point S has to create a signaling data packet with the current IP-address of the destination end point and to put this signaling data packet to the underlying IP network with RAO set. This signaling data packet is delivered hop-by-hop from the source end point towards the destination end point D according to the routing strategy of the underlying IP network until the first CP-capable node is arrived. Alerted by checking RAO, this CP catches the data packet and stops forwarding it. Further signaling messages are then exchanged between the source end point S and this CP and the first sub-flow is established. The CP creates a new signaling data packet with the IP-address of the destination end point D and puts this signaling data packet back to the underlying IP network with RAO set. This process is repeated until
1. all the involved CPs are found,
2. the last signaling data packet built by the last CP arrives at the destination end point, and
3. all the corresponding sub-flows are successfully established.

Taking the flow shown in Figure 1 as an example, a signaling data packet is initially created by S and addressed to D. This data packet is caught by X which builds a new signaling data packet addressed to D. This new signaling data packet is in turn caught by Y which builds a new signaling data packet addressed to D. The signaling data packet sent by Y is then caught by Z which builds a new signaling data packet addressed to D. Finally, the signaling data packet created by Z is received by D and the flow F(S, D) between S and D consisting of the sub-flows SF(S, X), SF(X, Y), SF(Y, Z) and SF(Z, D) is successfully established.

If the destination end point D of the flow moves or changes before or during the process of the flow establishment, the process fails. In this case the source end point S has to dig out the new IP-address of the destination end point D and to retry the flow establishment process from the very beginning.

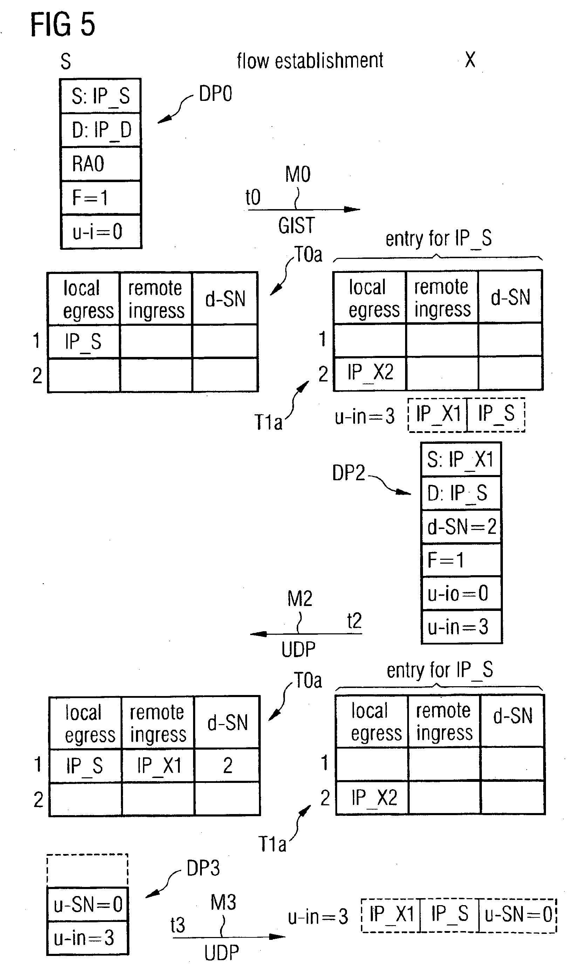

The details of the related processes and mechanisms can be found in the corresponding section in the chapter "Processes and mechanisms" and in Figures 5 to 7.

### Connecting to moved or changed end points

Since the user payload data packets of a flow are always addressed only by the identifier of the next sub-flow of that flow, it is not necessary for the related end points to update each other when they move or change. This makes it possible and easy to limit and to localize the effect of the movement or change of an end point.

When an end point of a flow gets a new IP-address, it requests the next CP of the flow for a new connection, i.e. a sequence of one or several new sub-flows. The CP checks if it is itself the optimal point to establish the new connection to the new IP address of the end point. If it is not, it forwards the request to the next CP in the same direction. This process is repeated until the optimal point is found at a CP which uses the same signaling process described in the last section to establish a new connection, i.e. a sequence of one or several new sub-flows, to the moved or changed end point. The resources allocated for the obsolete sub-flows are released. The flow is updated, but for all the CPs including the unmoved end point behind the CP of the optimal point, there is no change at all. Taking the flow shown in Figures 1 and 2 above as an example, when D moves or changes it sends a request to Z. Z checks and determines that itself is not the optimal point for building up a new connection. Z forwards the request to Y which decides to establish a new connection to the new IP-address of D. A sequence of new sub-flows is then established from Y to D, probably involving some new CPs, for instance W. The obsolete sub-flows SF(Y, Z) und SF(Z, D) are removed. The flow SF(S, Dx) is updated. But from the views of S and X there is no change.

Since the effect and influence of the movement and the change of the end points of a flow are limited as far as possible and localized as far as possible the performance degrading is minimized. In fact, in the most cases only the nearest sub-flow has to be reestablished, since most of the MNs usually move continuously. Since the nearest CP does not move or change and it is always reachable, there is no need to any third-party rendezvous-service. The details on the related processes and mechanisms can be found in the corresponding section in the chapter "Processes and mechanisms".

The algorithms, mechanisms and protocols used to determine the optimal point for establishing the connection from an existing flow to a moved or changed end point are not the topic of this document.

### Processes and mechanisms

### User payload data packet addressing

As described before, the central point of the flow-centric addressing is to send user payload data packets with the identifier of the next sub-flow instead of the IP-address of the destination end point. A sub-flow identifier consists of three parts, i.e. the IP-address of the upstream CP, the IP-address of the downstream CP and a sequence number. The downstream CP address is basically used by the underlying IP network to deliver the data packets from the upstream CP to the downstream CP while the upstream CP address together with the sequence number are used to determine efficiently the next sub-flow at the downstream CP.

| | | |
|---|---|---|
| The field of source address | The field of destination address | A field of optional data |
| The upstream CP address | The downstream CP address | The sequence number |

As shown in the table above, in the header of a user payload data packet sent by the upstream CP to the downstream CP of a sub-flow, the upstream CP address is carried in the field of the source IP-address, the downstream CP address is carried in the field of the destination IP-address and the sequence number is packed as optional information.

### Routing tables at a conjunction point (CP)

At each CP-capable node two routing tables may exist which are maintained and updated during the signaling processes of flow establishment. They are a routing table for the downstream direction and a routing table for the upstream direction. For bidirectional data flows, each routing table may be used to forward user data packets in the corresponding direction. For unidirectional data flows, the upstream routing table may be required to enable optimal rerouting of the data flow, when their destination endpoints move or change.

Figure 3 shows the logical structure of a downward routing table T1a which is used for forwarding in downstream direction. Each entry of this two dimensional table T1a stores the identifier of the next sub-flow of a flow in the downstream direction. The flow which the corresponding sub-flow belongs to is identified by the exact position of the entry in table T1a. The column position of the entry is determined by the upstream CP address carried in the field of the source IP address of a received data packet, see arrow 60, while the row position of the entry is determined by the sequence number carried as optional information in the same received data packet, see arrow 62.

In Figure 3 an example is shown with table T1a having three columns and four rows. The left column is supposed to belong to a router A with an IP-address IP_A. The second column belongs to the source device S, i.e. to the IP-address IP_S of the source device S. The right column belongs to another router B with an IP-address IP_B.

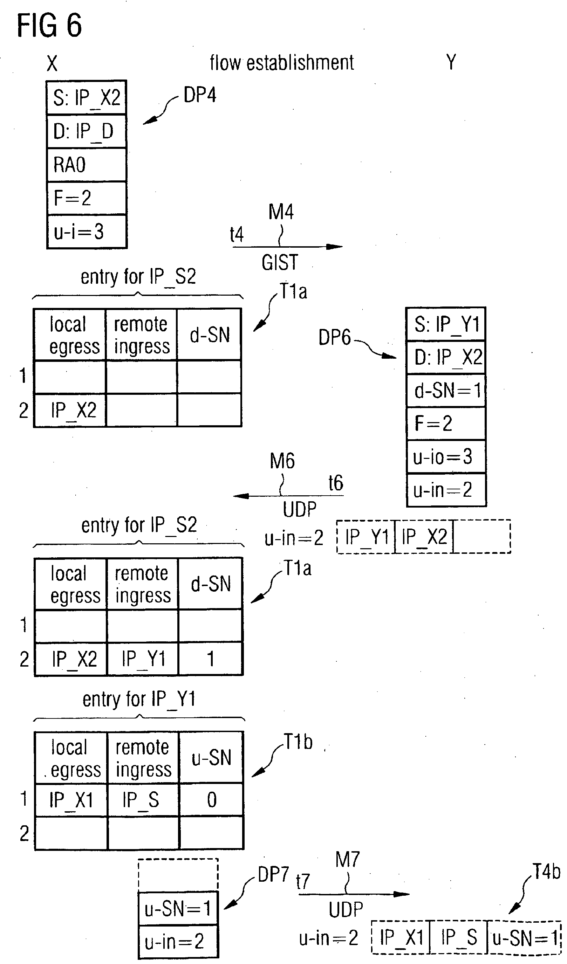

Furthermore, it is supposed that the field in the second column, second row, belongs to the flow F(S, D) shown in Figures 1 and 2. This field contains the sub-flow identifier SFidS2 for the next sub-flow in downward direction as seen from router X, i.e. for sub-flow SF(X, Y). As described in more detail below with reference to Figure 6, the sub-flow SF(X, Y) identifier SFid2 has the value "IP_X2, IP_Y1, 1".

The other rows of the second column may relate to further sub-flows from source device S to destination device D. There may be sub-flows for different media streams and/or control streams. It is also possible to use sub-flows to more than one destination device as in conferencing.

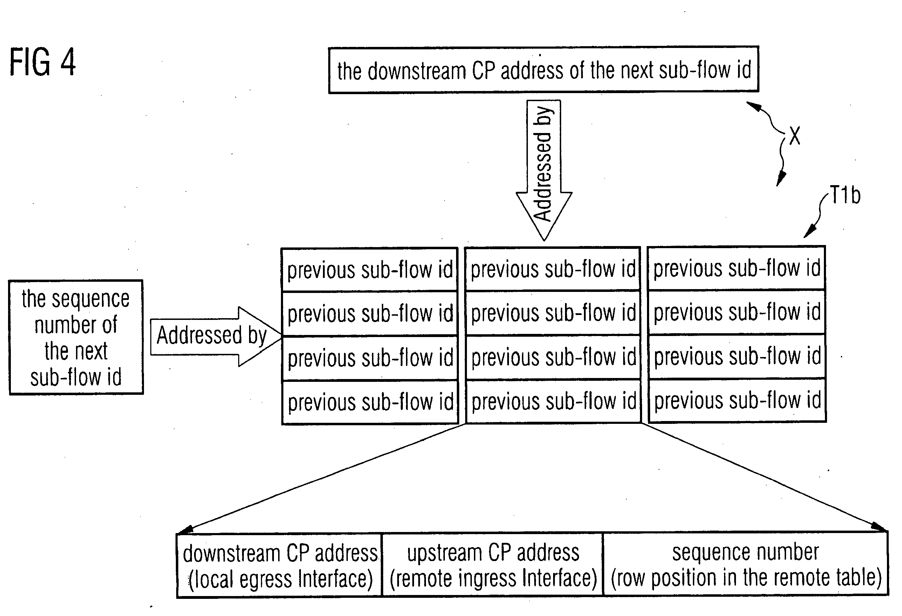

The structure of a routing table T1b for upstream direction is the same as that of the downstream routing table T1a. But the content is different as shown in Figure 4. Each entry of this two dimensional table T1b stores the identifier of the next sub-flow of a flow in the upstream direction, which is the previous sub-flow of the same flow in the downstream direction. The flow which the corresponding sub-flow belongs to is identified by the exact position of the entry in the table.

### Signaling of flow establishment

The principles of flow establishment are described above. This section describes the related signaling processes first in general and then in detail with reference to Figures 5 to 7.

At the source endpoint of the flow:
1. When a request is received from an upper layer application which contains among other quality and quantity parameters and at least the current IP-address of the destination endpoint of the flow a new entry of the routing table in the downstream direction is created.
2. A flow index is calculated and given back to the upper layer application which uses this flow index to address all the user payload data packets of the flow. The position of the flow entry in the routing table can be easily calculated from this flow index.
3. The field of "upstream CP address" of the table entry is filled with the IP-address of the corresponding local egress interface.
4. A signaling data packet is created containing a "u-index" field and addressed to the IP-address of the destination endpoint of the flow. The router alert option (RAO) of this data packet is set. The u-index field is set to a special value, e.g. "0".
5. The signaling data packet is sent via the underlying IP network.
6. The source endpoint waits for the backward signaling data packet from the next downstream CP.

At an intermediate CP where the signaling data packet is caught:
1. A new entry in the local downstream routing table is created in the column dedicated for the source IP-address carried in the signaling data packet. A d-sequence-number is created pointing to the row position of the new entry in the column mentioned before.
2. A buffer is allocated to store the egress IP-address in the upstream direction (which is the ingress IP-address in the downstream direction) of this CP and the ingress IP-address of the remote upstream CP in the upstream direction (which is the egress IP-address in the downstream direction, i.e. the source IP-address carried in the signaling data packet). A new u-index is created pointing to this buffer.
3. This CP sends a signaling data packet back to the previous upstream CP, from where the received signaling data packet was sent. The data packet containing at least the ingress IP-address of this CP, the d-sequence-number and the old u-index, called u-index old, received in the forward signaling data packet before and the newly locally created u-index, called u-index-new. This CP waits for an additional signaling data packet from the previous upstream CP.
4. This CP fills the field of "upstream CP address" of the downstream routing table entry with the IP-address of the corresponding local egress interface.
5. At the previous upstream CP (including the source endpoint):
   a) by receiving the backward signaling data packet sent by the next downstream CP, the field "downstream CP address" of the corresponding downstream routing table entry is filled with the ingress IP-address of the next downstream CP and the field "sequence number" is filled with the d-sequence-number carried in that signaling data packet.
   b) If the u-index-old of the backward signaling data packet has the special value, e.g. "0", this previous upstream CP is the source endpoint of the flow. In this case a u-sequence-number is created and set to the special value, e.g. "0". Then the method is continued in step.
   c) If this previous upstream CP is not the source endpoint,
      i) It creates a new entry in the local upstream routing table in the column dedicated to the ingress source IP-address of the next downstream CP. A new u-sequence-number is created pointing to the row position of this new entry.
      ii) The value of the u-index-old carried in the backward signaling data packet is used to find the buffer where two related IP-addresses and the sequence number were stored before for this new entry of the local upstream routing table.
      iii) The corresponding values are copied from the buffer to the new entry of the local upstream routing table. The buffer is released.
   d) This previous upstream CP sends an additional signaling data packet containing at least the newly created u-sequence-number and the u-index-new mentioned before to the downstream CP, which is waiting for this additional signaling data packet from the previous upstream CP. The process is then closed for this previous upstream CP.
6. By receiving the additional signaling data packet, the downstream CP uses the u-index-new to find the local buffer and stores there the u-sequence-number received as "sequence number" for the new entry of the local upstream routing table, which will be created later.
7. This CP builds a new signaling data packet, which is basically identical to the original signaling data packet it caught before (not the additional signaling data packet), with the only exceptions that the "source address" field is replaced by the IP-address of the related local egress interface and "u-index" field contains the index pointing to the local buffer.
8. The signaling data packet is sent via the underlying IP network.
9. The source endpoint waits for the backward signaling data packet from the next downstream CP.

At the destination endpoint of the flow:
1. By receiving a signaling data packet directly addressed to it the destination endpoint of the flow creates a new entry in the local upstream routing table to store the egress IP-address in the upstream direction (which is the ingress IP-address in the downstream direction) of this endpoint and the ingress IP-address of the remote upstream CP in the upstream direction (which is the egress IP-address in the downstream direction, i.e. the source IP-address carried in the signaling data packet). A new u-index is created pointing to this entry.
2. The endpoint sends a signaling data packet back to the previous upstream CP from where the received signaling data packet was sent. The data packet containing at least the ingress IP-address of this endpoint, the d-sequence-number and the old u-index, called u-index old, received in the forward signaling data packet before and the newly locally created u-index, called u-index-new. This CP waits for an additional signaling data packet from the previous upstream CP.
3. By receiving the additional signaling data packet it is waiting for, this endpoint uses the u-index-new to find the new entry of the local upstream routing table and store there the u-sequence-number received as "sequence number". The signaling process is then closed.

In the example of Figure 5, at the source end point S of the flow:
1. When from an upper layer application a request is received which contains among other quality and quantity parameters, and at least the current IP-address of the destination end point of the flow a new entry of a routing table T0 for the downstream direction is created.
2. A flow index is calculated, for example with the value "1", and given back to the upper layer application which uses this flow index to address all the user payload data packets of the flow. The position of the flow entry in the routing table TO can be easily calculated from this flow index or both may have the same value as in the example.
3. The field "upstream CP address" or "local egress" of table T0, table entry in row one, is filled with the IP-address of the corresponding local egress interface, i.e. with IP_S in the example of Figures 1 to 9.
4. A signaling data packet DP0 is created containing a "u-index" field and addressed to the IP-address IP_D of the destination end point D of the flow F(S, D). The router alert option (RAO) of this data packet DP0 is set. Furthermore, it is possible to include a flow identifier F that has the value "1" in the example. The flow identifier F can be used for identifying a response to the data packet DP0. The u-index field u-i is set to a special value, e.g. "0".
5. The signaling data packet DP0 is sent via the underlying IP network 10 at time t0, see message M0. The message M0 may be a GIST message (General Internet Signaling Transport) or a message according to another appropriate protocol.
6. The source end point S waits for a backward signaling data packet DP2 from the next downstream CP, i.e. router X.

As further shown for the example in Figure 5, at an intermediate CP, for instance router X, where the signaling data packet is caught:
1. A new entry in a local downstream routing table T1a is created in the column dedicated for the source IP-address carried in the signaling data packet, i.e. in the second column. A d-sequence number (downstream) is created pointing to the row position of the new entry in the column mentioned before. In the example, the second row is used for the new entry.
2. A buffer is allocated to store the egress IP-address IP_X1 in the upstream direction (which is the ingress IP-address in the downstream direction) of this CP and the ingress IP-address IP_S of the remote upstream CP in the upstream direction (which is the egress IP-address in the downstream direction, i.e. the source IP-address carried in the signaling data packet DPO). A new u-index is created pointing to this buffer, e.g. u-in = 3. The allocation of the buffer is necessary because the respective column in the upstream routing table is not known at the moment.
3. Then, this CP, for instance router X, sends a signaling data packet DP2 back to the previous upstream CP, in the example of Figure 5 to source device S, from where the received signaling data packet, for instance DP0, was sent. Data packet DP2 is sent at time t2, for instance in a UDP message M2 (User Datagram Protocol, RFC 768). Alternatively, another appropriate protocol may be used to send data packet DP2. The data packet DP2 contains at least the ingress IP-address of this CP, for instance IP_X1, and the sequence number SN identifying the corresponding row in table T1a. In the example the sequence number SN has the value "2". Furthermore, data packet DP2 may contain the flow index F that was delivered in data packet DP0. The data packet DP2 contains also the old u-index u-io=0, called u-index (upward) old, received in the forward signaling data packet DP0 before and the newly locally created u-index u-in = 3, called u-index-new. This CP waits for an additional signaling data packet from the previous upstream CP.
4. This CP fills the field of "upstream CP address" or "local egress" of the routing table entry with the IP-address IP_X2 of the corresponding local egress interface. In the example, the local egress address IP_X2 is stored in table T1a, second column, second row, first field. It is also possible to store this data earlier or later. The local address IP_X2 identifies a port und may be determined with standard routing algorithm for finding the next router to IP-address IP_D.
5. At the previous upstream CP (including the source end point S):
   a) By receiving the backward signaling data packet sent by the next downstream CP, the field "downstream CP address" or "remote ingress" of the corresponding routing table entry is filled with the ingress IP-address of the next downstream CP and the field "sequence number" is filled with the d-sequence number carried in that signaling data packet. In the case of data packet DP2, the remote egress address IP_X1 and the sequence number SN=2 are stored in table T0.
   b) If the u-index-old of the backward signaling data packet has the special value, e.g. "0", this previous upstream CP is the source endpoint S of the flow. In this case a u-sequence-number may be created and set to the special value, e.g. "0". Then, the method is continued in step d.
   c) If this previous upstream CP is not the source endpoint and as described later in more detail with reference to Figure 6:
      i) It creates a new entry in the local upstream routing table T1b in the column dedicated to the ingress source IP-address of the next downstream CP, here IP_Y1 as indicated in DP6. A new u-sequence-number u-SN is created pointing to the row position of this new entry.
      ii) The value of the u-index-old u-io = 3 carried in the backward signaling data packet DP6 is used to find the buffer, where two related IP-addresses and the sequence number were stored before for this new entry of the local upstream routing table.
      iii) The corresponding values IP_X1, IP_S, u-SN = 0 are copied from the buffer to the new entry of the local upstream routing table. Then, the buffer is released.
   d) This previous upstream CP sends an additional signaling data packet DP3, DP7 containing at least the newly created u-sequence-number and the u-index-new mentioned before to the downstream CP which is waiting for this additional signaling data packet from the previous upstream CP. The process is then closed for this previous upstream CP. In the example, data packet DP3 contians u-SN = 0 and u-in = 3.
6. By receiving the additional signaling data packet DP3, DP7, the downstream CP uses the u-index-new to find the local buffer and store there the u-sequence-number received as "sequence number" for the new entry of the local upstream routing table, which will be created later. In the case of data packet DP3 u-SN = 0 is stored in buffer u-in = 3.
7. As shown further in Figure 6, this CP builds a new signaling data packet DP4 which is basically identical to the signaling data packet it caught before (not the additional signaling data packet DP3), with the exception that the "source address" field is replaced by the IP-address of the related local egress interface and that the u-index field contains the index pointing to the local buffer. In the example of Figure 6, a data packet DP4 is created that comprises:
   - source address IP_X2 of router X, egress,
   - destination address IP_D of destination device D,
   - router alert option RAO,
   - flow index F = 2, and
   - upstream index u-i = 3.
8. The signaling data packet is sent via the underlying IP network 10. In the example of Figure 6 the data packet DP4 is sent with the help of a GIST message M4 at time t4.
9. The node then waits for the backward signaling data packet from the next downstream CP. In the example, node X waits for the answer to data packet DP4 that can be identified using the flow index F=2.

The other steps with relation to routers X and Y correspond to the steps that were explained in Figure 5 for the source device S and router X. The data packet DP6 is created in router X to answer message M4. Data packet DP6 comprises:
- source address IP_Y1 of router Y, ingress,
- destination address IP_X2,
- d-sequence number d-SN = 1,
- flow index F = 2,
- upstream index old u-io = 3, and
- upstream index new U-in = 2.

Furthermore router Y uses a local buffer with the index u-in = 2. This buffer stores the input port of data packet DP6, i.e. IP_Y1, and the remote upstream ingress IP-address IP_X2 as indicated in data packet DP6.

Data packet DP6 is sent with the help of a UDP message M6 at time t6. After receiving data packet DP6 router X stores the following in table T1a as indicated in message M6:
- remote ingress: IP_Y1, and
- sequence number of the corresponding flow SN=1.

Furthermore, router X creates or uses the column for IP_Y1 in the upstream routing table T1b. The IP-address IP_Y1 is now known from data packet DP6. Router X copies the entry of buffer u-in = 3, for instance, to row one of this column, i.e. to the row with u-SN =1.

Then, router X creates the data packet DP7 that contains, for instance, the first four fields of data packet DP0 and the following fields:
- upstream sequence number u-SN = 1, and
- upstream index new u-in = 2 as indicated in data packet DP6.

The data packet DP7 is sent in a UDP message M7 at time t7. Router Y receives message M7 and uses u-SN = 1 to add this value to the buffer with the index u-in = 2.

These steps are repeated to create a chain of bindings from source device S over router X, router Y and router Z to the destination device D as well as in the backward direction.

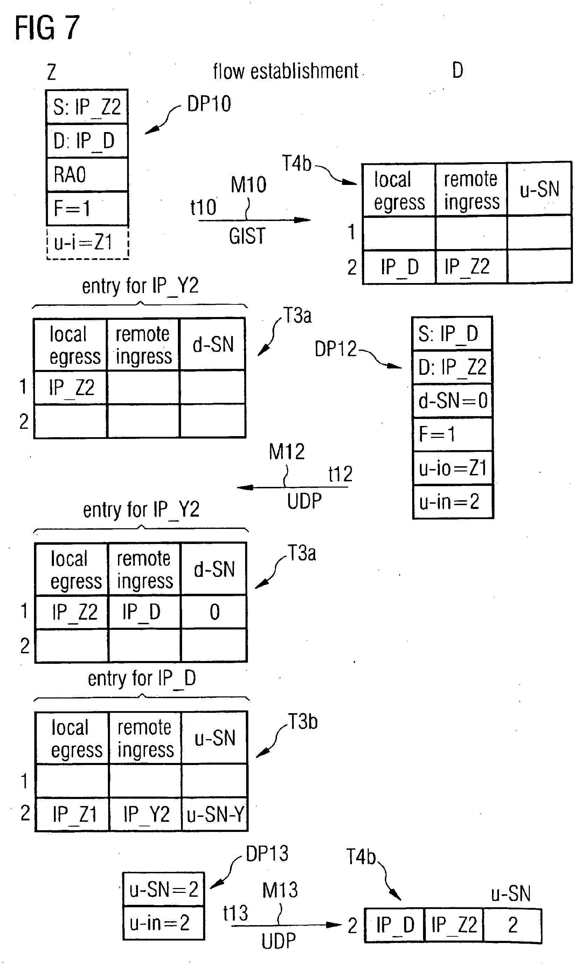

As shown for the example in Figure 7, at the destination end point D of the flow:
1. By receiving a signaling data packet DP10 directly addressed to it, the destination end point D creates a new entry in the local upstream routing table T4b to store the egress IP-address IP_D in the upstream direction (which is the ingress IP-address in the downstream direction) of this endpoint D and the ingress IP-address IP_Z2 of the remote upstream CP in the upstream direction (which is the egress IP-address in the downstream direction, i.e. the source IP-address carried in the signaling data packet). A new u-index u-in = 2 is created pointing to this entry. The destination device D does not store a downward routing table. It is possible to identify the flow with the help of higher protocol layers in the destination device D, for instance at the TCP/UDP layer with the help of a UDP/TCP port number.
   The data packet DP10 is sent in a GIST message M10 at time t10 from router Z to destination device D and comprises:
   - source address IP_Z2 of router Z, egress,
   - destination address IP_D of destination device D,
   - router alert option RAO,
   - flow index F = 1, and
   - upstream index u-i = Z1, i.e. a value used in router Z to point to the local buffer.
2. The endpoint D sends a signaling data packet DP12 back to the previous upstream CP, from where the received signaling data packet DP10 has been sent. The data packet DP12 containing at least:
   - the ingress IP-address IP_D of this end point D,
   - the special d-sequence number "0",
   - the old u-index u-io = Z1 as indicated in data packet DP10, and
   - the newly locally created u-index u-in = 2, called u-index-new.
      The data packet DP12 is sent in a UDP message at time t12. Then, this CP D waits for an additional signaling data packet from the previous upstream CP Z.
      After receiving data packet DP12, router Z stores the following in his forwarding routing table T3a, column for IP_Y2:
      - remote ingress: IP_D, and
      - sequence number of the corresponding flow SN=0.

      Furthermore, router Z reads the IP-address IP_D of the next downstream device from data packet DP12 and creates or uses a column in the upstream table T3b for this IP-address IP_D to store the content of the local buffer u-io = Z1 as also indicated in data packet DP12. In the example, it is supposed that in this case row two is used to store the entry "IP_Z1, IP_Y2, u-SN-Y", were u-SN-Y identifies the corresponding row in the upstream routing table T2b of router Y.
      Then router Z sends to device D an additional Signaling data packet DP13 that corresponds to data packet DP7 but contains:
      - u-SN = 2 as used in table T3b, column for IP_D, row number, and
      - u-in = 2 as indicated in data packet DP12.

      The data packet DP13 is sent in a UDP message at time t13.
3. By receiving the additional signaling data packet DP13 it is waiting for, this endpoint D uses the u-index-new u-in = 2 to find the new entry of the local upstream routing table T4b and stores there the u-sequence-number u-SN = 2 received as "sequence number". The signaling process is then closed.

The processes described in this section can be easily implemented using the protocol of General Internet Signaling Transport (GIST) being developed by the NSIS (Next Step In Signaling) group of IETF. The signaling associations between neighboring CPs of a flow, including both the source end point S and the destination end point D, can be created and maintained in the same way as GIST does.

### User payload data delivery

As shown in Figure 8, at each CP, including the destination end point D of the flow, when a user data packet is received:
1. The upstream CP address and sequence number of the previous sub-flow of the corresponding flow are taken out respectively from the field of the source IP-address and from the field of the related optional information of the data packet;
2. A special d-sequence number, e.g. "0", is reserved to indicate that the destination end point of the flow is reached. If the d-sequence number carried in the received data packet is "0", the user payload data is forwarded to the upper layer application for further processing and the process ends successfully. Otherwise,
3. the table entry has to be found, where the identifier of the next sub-flow of the same flow is stored. The row and column positions of this entry are calculated respectively from the d-sequence number and the upstream CP address of the previous sub-flow.
4. The identifier of the previous sub-flow carried in the data packet is then replaced by the identifier of the next sub-flow of the same flow stored in the table entry found before.
5. The updated data packet is sent to the next downstream CP by the underlying IP-network.

This means in the context of the example of Figures 1 to 9, for instance, for router X that:
1. a data packet DP20 is received from the source device S. The data packet DP20 is sent at time t20 and comprises:
   - source address IP_S,
   - destination address IP_X1,
   - d-sequence number SN = 2, and
   - user data.
      The data packet DP20 may be for instance a TCP or a UDP packet. Alternatively, other protocols may be used for transmitting the data of data packet DP20.
2. The sequence number d-SN in data packet DP20 is not "0", therefore step 3 follows.
3. Table T1a, second column, is selected because this column is for IP_S, i.e. the source address of data packet DP20. Table T1a, second column, second row, is selected because the d-sequence number in data packet DP20 has the value "2".
4. The old identifier ID1 (IP_S, IP_X1, 2) of the previous sub-flow SF(S, X) carried in the data packet DP20 is then replaced by the identifier ID 2 (IP_X2, IP_Y1, 1) of the next sub-flow SF(X, Y) of the same flow F(S, D) as stored in the table entry found before, i.e. in step 3.
5. An updated data packet DP22 is sent to the next downstream CP, i.e. to router Y, by the underlying IP-network 10 at time t22.

At the source end point S of a flow, the upper layer application uses a simple flow index, e.g. an integer, to address the user payload data of the flow. The index is created during the flow establishment as described above and can be used to determine the table entry, where the identifier of the first sub-flow of the flow is stored. The corresponding fields of the data packets are then filled with this sub-flow identifier and sent to the next downstream CP of the flow by the underlying IP-network.

This process is very simple and easy. It can be implemented directly by using hardware so that the routing can be as efficient as normal classical routing in IP-networks.

### Signaling when end points move or change

When the destination endpoint of a flow moves or changes, i.e. it gets a new IP-address,
1. It sends a signaling message to the nearest CP, say CP(n-1), in the upstream direction to inform CP(n-1) about the new IP-address of the destination endpoint. The IP-address of CP(n-1) can be found in the corresponding entry of the local upstream routing table in the field "upstream CP address". Besides the new IP address of the destination endpoint, the signaling data packet carries at least the "downstream CP address" and the "sequence number" of the same table entry, which are used to find the flow-entry at CP(n-1).
2. By receiving the signaling message, CP(n-1) checks if it is itself the optimal CP to build the new connection to the new destination endpoint address. If not, CP(n-1) forwards the signaling message to the next nearest CP, say CP(n-2), in the upstream direction to inform CP(n-2) about the new IP-address of the destination endpoint. The IP-address of CP(n-2) can be found in the corresponding entry of the local upstream routing table in the field "upstream CP address". Besides the new IP address of the destination endpoint, the signaling data packet carries at least the "downstream CP address" and the "sequence number" of the same table entry, which are used to find the flow-entry at CP(n-2).
3. CP(n-1) removes the corresponding entry of this flow from the routing tables.
4. Step 2 and 3 are repeated by CP(n-2), CP(n-3) and so on, until CP(n-m) which finds out that it is itself the optimal CP for building the new connection to the new destination endpoint.
5. CP(n-m) uses the processes described in the last section "Signaling of flow establishment" to establish the new sequence of sub-flows to connect the new destination endpoint of the flow. The only difference is that CP(n-m) doesn't work in the same way as the source endpoint of a flow does. It must handle the local routing tables in both downstream and upstream directions accordingly.

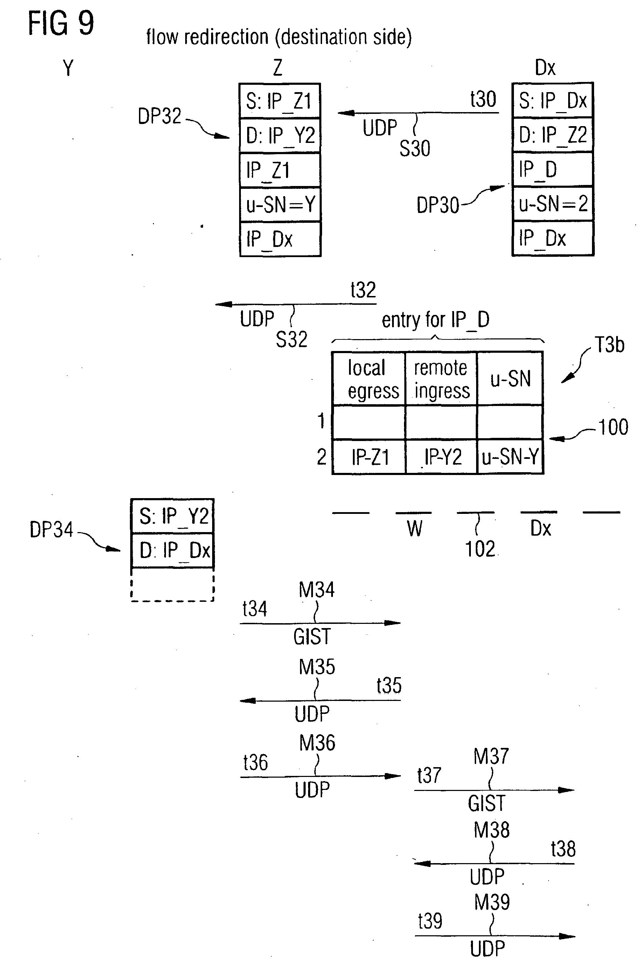

As shown for the example in Figure 9, when the destination end point D of a flow moves, i.e. it gets a new IP-address IP_Dx and is therefore called destination device Dx,
1. destination end point D or Dx sends a signaling message S30 at time t30 to the nearest CP, say CP(n-1), in the upstream direction to inform CP(n-1) about the new IP-address of the destination end point. Because D and Dx is the same device both the old IP-address IP_D and the new IP-address IP_Dx are known to D, Dx. Furthermore D, Dx also knows the IP-address IP_Z2 of router Z, for instance from message M10, see Figure 7. The IP-address IP_Z2 is stored in the upstream routing table T4b. The signaling message S30 may be a UDP message that is directed to the operating system of router Z.
   The data packet DP30 contains, for instance:
   - source address IP_Dx,
   - destination address IP_Z2,
   - IP_D for finding the columns in the upward routing table T3b in router Z,
   - u-SN = 2 as indicated in routing table T4b for finding the row in the upstream routing table T3b in router Z, and
   - IP_Dx, i.e. the new IP-address for copying to other data packets as described below in more detail.
2. By receiving the signaling message S30, CP(n-1) checks if it is itself the optimal CP to build the new connection to the new destination end point address. If it is not the optimal CP, CP(n-1) forwards the signaling message to the next nearest CP, say CP(n-2), in upstream direction to inform CP(n-2) about the new IP-address IP_Dx of the destination end point D. It is assumed that router Z is not the optimal router. Therefore, a signaling message S32 is sent from Z to X at time t32. Router Z knows the address of router Y for instance from flow establishing, see upstream routing table T3b. A data packet DP32 of signaling message S32 contains:
   - source address IP_Z1,
   - destination address IP_Y2,
   - IP_Z1 as indicated in table T3b for finding the columns in the upstream routing table T2b in router Z,
   - u-SN = u-SN-Y as indicated in routing table T4b for finding the row in the upstream routing table T3b in router Z, and
   - IP_Dx, i.e. the new IP-address as copied from data packet DP30.
3. CP(n-1) removes the corresponding entries of this flow from the routing tables T3a, T3b.
4. Steps 2 and 3 are repeated by CP(n-2), CP(n-3) and so on, until CP(n-m) which finds out that it itself is the optimal CP for building the new connection to the new destination end point. In the example, it is assumed that router Y is the optimal router for redirecting the flow F(S, D) to Dx for creating the modified flow F(S, Dx), see also Figures 1 and 2.
5. CP(n-m) uses the processes described in the section "Signaling of flow establishment" to establish the new sequence of sub-flows to connect the new destination end point Dx of the flow. The only difference is that CP(n-m) does not work in the same way as the source end point S of a flow does. It should handle the local routing tables in upstream direction and in downstream direction.

Figure 9 shows that signaling message S32 is received in router Y. Router Y determines router W as the appropriate router for the redirection of the flow by routing on the basis of the new destination address IP_Dx. The steps for flow establishing are performed as described above with relation to Figures 5 to 7:
- a data packet DP34 is sent from router Y to router W in a message M34 at time t34, for instance using GIST. Data packet DP34 corresponds to data packet DP4.
- router W answers message M34 with a message M35 sent at time t35. The message M35 is, for instance, a UDP message and corresponds to message M6. When processing message M35, router Y modifies the routing tables for both directions.
- router Y answers message M35 with a UDP message M36 at time t36. The message M36 corresponds to message M7.

After receiving message M36, router W sends a GIST message M37 to the new destination device Dx at time t37. Message M37 corresponds to message M10. Message M37 is answered by a UDP message M38 at time t38. Message M38 corresponds to message M12. A UDP message M39 is sent from router W to device Dx at time t39. Message M39 corresponds to message M13.

As also shown in Figure 9, when the destination end point D of the flow changes, i.e. it is another device with a new IP-address IP_Dx, step 1 is modified but steps 2 to 5 are the same. In a first example, the new destination address Dx is known to the old destination device D, for instance by manual configuration or by direct signaling between D and Dx. The old destination device D sends the signaling message S30 to router Z in the first example. The IP-address of router Z was stored in the old destination device D during flow establishment.

Alternatively, it is possible to transmit the IP-address of Z and the u-SN to the new destination device Dx or to configure this data manually in the new destination device Dx. Thus it is possible to send signaling message S30 from the new destination device Dx to router Z including the new IP-address IP_Dx that is known in the new destination device Dx.

When the source endpoint of a flow moves or changes, i.e. it gets a new IP-address,
1. It sends a signaling message to the nearest CP, say CP(1), in the downstream direction to inform CP(1) about the new IP-address of the source endpoint. The IP-address of CP(1) can be found in the corresponding entry of the local downstream routing table in the field "downstream CP address". Besides the new IP address of the source endpoint, the signaling data packet carries at least the "upstream CP address" and the "sequence number" of the same table, which are used to find the flow-entry at CP(1).
2. By receiving the signaling message, CP(1) checks if it is itself the optimal CP for the new connection from the new source endpoint address. If not, CP(1) forwards the signaling message to the next nearest CP, say CP(2), in the downstream direction to inform CP(2) about the new IP-address of the source endpoint. The IP-address of CP(2) can be found in the corresponding entry of the local downstream routing table in the field "downstream CP address". Besides the new IP address of the source endpoint,, the signaling data packet carries at least the "upstream CP address" and the "sequence number" of the same table, which are used to find the flow-entry at CP (2) .
3. CP(1) removes the corresponding entry from the routing table.
4. Steps 2 and 3 are repeated by CP(2), CP(3) and so on, until CP(m) which finds out that itself is the optimal CP for the new connection from the new source endpoint.
5. CP(m) sends a signaling message to the new source endpoint to inform it to build the new parts of the flow to CP(m).
6. Receiving the signaling message the new source endpoint starts the processes described in the last section "Signaling of flow establishment" to establish the new sequence of sub-flows of the flow to connect CP(m), with CP(m) as the "virtual" destination endpoint. The only difference is that CP(m) is not the real destination endpoint of a new flow, but just a special intermediate CP of the same flow. CP(m) must also handle the local routing tables in both downstream and upstream directions accordingly.

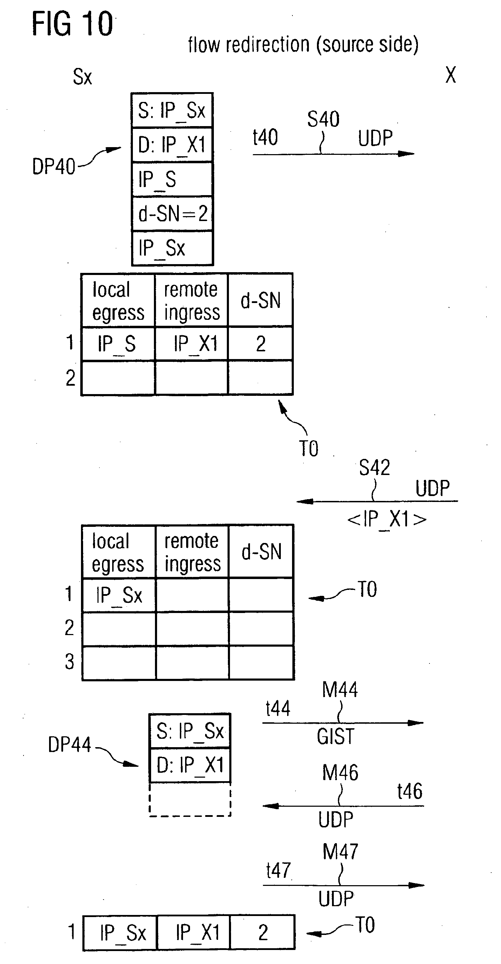

As shown for the example in Figure 10, when the source end point S of a flow moves, i.e. it gets a new IP-address IP_Sx:
1. It sends a signaling message S40 to the nearest CP, say CP(1), in downstream direction to inform CP(1) about the new IP-address of the source end point. Because the device Sx remains the same device it knows both the new IP-address IP_Sx and the address IP_X of the next relevant router X of the flow. The IP-address of CP(1) can be found in the corresponding entry of the local downstream routing table, e.g. T0 for device Sx, in the field "downstream CP address" or "remote ingress". Besides the new IP address of the source endpoint, the signaling data packet carries at least the "upstream CP address" and the "sequence number" of the same table, which are used to find the flow-entry at CP(1). A data packet DP40 for message S40 contains:
   - source address IP_Sx,
   - destination address IP_X1,
   - IP_S as indicated in table T0 for finding the columns in the downstream routing table in router X,
   - d-SN = 2 as indicated in routing table T0 for finding the row in the downstream routing table in router X, and
   - IP_Sx, i.e. the new IP-address.
2. By receiving the signaling message, CP(1) checks if it is itself the optimal CP for receiving the new connection from the new source end point address IP_Sx. If it is not the optimal CP, CP(1) forwards the signaling message to the next nearest CP, say CP(2), in downstream direction to inform CP(2) about the new IP-address IP_Sx of the source end point. It is assumed that router X is the optimal router. Alternatively, more than one sub-flow has to be changed.
3. CP(1) removes the corresponding entry from the routing tables.
4. Steps 2 and 3 are repeated by CP(2), CP(3) and so on, until CP(m) which finds out that it itself is the optimal CP for the new connection from the new source end point.
5. CP(m) sends a signaling message S42 to the new source end point Sx to inform it to build the new parts of the flow to CP(m). Message S42 contains the ingress IP-address IP_X1 to indicate the aim for the new part of the flow.
6. Receiving the signaling message S42, the new source end point Sx starts the processes described in the last section "Signaling of flow establishment" to establish the new sequence of sub-flows of the flow to connect CP(m), with CP(m) as the "virtual" destination end point. The only difference is that CP(m) is not the real destination end point of a new flow, but just a special intermediate CP of the same flow. CP(m) does not forward any signaling data packet redirecting the flow and it creates new entries in its routing tables.

Source device Sx starts to establish a flow from itself to router X in response to message S42 as described above with relation to Figure 5. The new IP-address IP_Sx is stored instead of the old IP-address IP_S in table T0. Then, a data packet DP44 is sent to router X. Data packet DP44 corresponds to data packet DP0, see Figure 5, with the exception that the source IP-address is IP_Sx and that the destination IP-address is IP_X1 according to message S42.

Data packet DP44 is transmitted in a GIST message M44 to router X at time t44. The router X identifies message M44 as an answer to message S42, for instance, by using higher layer protocols. Router X answers to message M44 with a UDP message M46 at time t46. The message M46 corresponds to message M2. The source device Sx updates its table T0 in response to message M46 with the complete entry "IP_Sx, IP_X1, 2". furthermore a UDP message M47 is sent at time t47. Message M47 corresponds to message M3.

In another example, more than one sub-flow is changed on the source side of the flow. However, the source device Sx remains responsible for establishing the flow to the first router that belongs to the old flow F(S, D) and to the modified flow F(Sx, D).

An advantage of establishing the flow from the source device is that there may be different optimal routes for the upstream and downstream flows. This is also true with regard to Figure 9.

As also shown in Figure 10, when the source end point S of the flow changes, i.e. it is another device Sx with a new IP-address IP_Sx, step 1 is modified but steps 2 to 6 are the same. In a first example, the new source address Sx is known to the old source device D, for instance by manual configuration or by direct signaling between S and Sx. The old source device Sx sends the signaling message S40 to router X in the first example. The IP-address of router X was stored in the old source device D during flow establishment.

Alternatively, it is possible to transmit the IP-address of router X and other relevant data to the new source device Sx or to configure this data manually in the new source device Dx. Thus it is possible to send signaling message S40 from the new source device Sx to router Z including the new IP-address IP_Sx that is known in the new source device Dx. The complete entry of table TO, row 1, may be also transmitted to the new source device Sx and may be used to identify the sub-flow in message S40.

### Potential improvements

This paper focuses only on the principles and the logical processes related to the concepts and the approaches of flow-centric addressing. The mechanisms and the procedures presented here emphasize only the main structure and the logical sequences without considering possible improvements at the engineering level. The following sections discuss some potential improvements and extensions.

### Bidirectional flows

So far this paper studies basically only the issues related to unidirectional flows, i.e. the streams of user payload data packets flowing from one end point to the other end point in one and the same direction. But it is very easy and straightforward to extend the mechanisms and the processes proposed in this paper to cover the requirements of bidirectional flows.

A bidirectional flow can be considered as two unidirectional flows established between the same pair of end points and consisting of one and the same sequence of bidirectional sub-flows connecting the same intermediate CPs. To handle bidirectional flows, the routing table at a CP must be extended to maintain the identifiers of the next sub-flows of the same bidirectional flow in both directions. The processes of flow establishment must be extended accordingly to fill up the related entries of the extended routing tables at each CP between the two end points of a flow.

In some cases, to handle bidirectional flows can be even simpler than to handle unidirectional flows - there is no need to emphasize the difference between handlings in downstream or in upstream directions. For instance, there is no need to distinguish the second process from the first one described above in the section "Signaling when end points move or change".

### Optimal CP of rerouting

When an end point of a flow moves or changes, i.e. it gets a new locator, it is very crucial to minimize the unavoidable performance degrading to determine fast and efficiently the optimal CP from which a new connection, i.e. a sequence of new sub-flows, is to be established to connect the moved or changed end point. But this issue is outside the scope of this paper.

### End-to-end signaling

The concept and the approach of flow-centric addressing eliminate the need for an end point of a flow to address directly the other end point of the same flow in every user payload data packet. This makes it possible to limit and to localize the effects and influences of the movements and changes at one end of a flow so that reestablishment of signaling state on the complete path between the two end points can be avoided. This feature may bring a small additional task - after a flow is successfully established, an end point is not automatically informed about each change at the other end point. For some upper layer applications in some cases, it is necessary for one end point of a flow to know the current locator or even identifier of the other end point of the same flow. There are basically two ways to solve this issue. The first way is to use signaling associations established during the flow setup. The second way is to have all or just some data packets sent by an end point to carry the current locator or identifier of this end point as an optional data.

### Moving networks

A flow may cross the boundary of a moving network connecting to another network by a mobile router. When such a network moves, the locators of its mobile routers change when observed from outside the network. But the internal structure of the mobile network remains the same. From the points of view of a flow this means a sequence of concatenated sub-flows, from one end point to an intermediate CP, say CP-mobile, implemented at the mobile router of the moving network, move together. Within the moving part there is basically no change. The question is how to rebuild the connection between CP-mobile and the nearest and appropriate CP of the unmoved part. The two processes introduced in the section "Signaling when end points move or change" can easily be modified to cover the specific requirements in this case, where CP-mobile works in a similar way as an end point of a flow.

Since the effect and the influence of a moving end point or a moving mobile network is limited and localized with the concept and the approach of flow-centric addressing, in principle, multiple concurrent movements or changes of different CPs (including both end points) of a flow can be handled in parallel without inter-disturbances.

As mentioned before, the concept and the approach of flow-centric addressing limits and localizes the effects and the influences of a moving or changing node or a whole network by enabling an end point (or a CP) of a flow to address the next sub-flow instead of the other end point of the flow. Since every user payload data packet of the flow has to carry only the identifier of the local sub-flow, there is no need to signal to and/or to update every node of the complete flow when the end points of the flow move or change. In this case, in order to maintain the whole flow, it is enough just to rebuild the nearest sub-flows to follow the moved or changed end points. Since the effect and influence are most possibly limited and localized, the expensive processes of reestablishing the signaling states of the complete flow are avoided. In this way the performance degrading caused by end point movements or changes can be minimized and the possible performance blackout is avoided. Since signaling is required only between a moving part, the moved or changed end point, and a fixed part, e.g. the CP nearest to the moved or changed end point, there is no need to any third-party infrastructure service enabling rendezvous between two moving parts, which is not always available in diverse ad hoc networking environments. The routing procedures designed for any CP are so simple and easy that they can be implemented directly by hardware, i.e. without using a program. The flow-centric approach enables seamless continuity of data flows even if their flow-end points change, e.g. jumps from one equipment to another equipment, and provides a solid basis for the solutions to the issues of application session mobility.

### List of reference signs

10 IP network
S source device
D destination device
W to Z router
12 to 30 intermediate node
F(S,D) flow
SF(X,Y) sub-flow
50 to 58 intermediate node
SFiD sub-flow identifier
60, 62 arrow
70 to 74 id-part
T0a to T3a downstream routing table
T1b to T4b upstream routing table
DP2 to DP 34 data packet
t0 to t47 time
M0 to M47 message
S30 to S42 signaling message
100 arrow
102 line

## Claims

1. Method for forwarding data of a data packet (DP20), comprising:
receiving a first data packet (DP20),
using a source identifier (IP_S) of the data packet (DP20) for forwarding the data of the first data packet (DP20) in a second data packet (DP22),
creating *for a flow a* chain of bindings between pairs of source addresses and destination addresses from a first source device (S) to a first destination device (D),
**characterized in that** the method comprises:
changing at least one binding within the chain of bindings of the flow while maintaining at least one binding within the chain of bindings of the flow during the life time of a data stream that is modeled by the flow.

2. Method according to claim 1, **characterized in that** the first data packet (DP20) comprises:
- the first source identifier (IP_S) that identifies the source of the first data packet (DP20),
- a first destination identifier (IP_X1),
the method further comprising:
determining a second destination identifier (IP_Y1) using the first source identifier (IP_S),
the second destination identifier (IP_Y1) being different from the first identifier (IP_S),
the second data packet (DP22) comprising:
- the second destination identifier (IP_Y1) for identifying the destination of the second data packet (DP22).

3. Method according to claim 2, **characterized in that** the first data packet (DP20) comprises:
- a further identifier (d-SN) that identifies a transmission flow F(S, D) to which the first data packet (DP20) belongs, the method further comprising:
determining the second destination address (IP_Y1) by using the first source identifier (IP_S) and the further identifier (d-SN).

4. Method according to claim 3, **characterized in that** the method comprises:
- determining a second further identifier (d-SN) using the first source identifier (IP_S) and the first further identifier (d-SN),
the second data packet (DP22) comprising:
- the second further identifier (d-SN).

5. Method according to claim 1, **characterized in that** the method comprises:
in a second device (X) receiving a first message (M0) from a first device (S),
the first message (M0) comprising:
- a source address (IP_S) of the first device (S),
- a destination address (IP_D) identifying a device (D) that is different from the second device (X),
the method comprising:
in the second device (X) due to the first message (M0) initiating the creation of a binding (T1a, IP_S) between the source address (IP_S) of the first device (S) and the destination address (IP_Y1) of a third device (Y).

6. Method according to claim 5, **characterized in that** the first message (M4) comprises:
- an upstream identifier (u-i) which is used to create a second chain of bindings.

7. Method according to claim 5 or 6, **characterized in that** the method comprises:
sending a second message (M4) from the second device (X) to a third device (Y) due to the first message (M0),
the second message (M4) comprising:
- a source address (IP_X2) of the second device (X), and
- the destination address (IP_D) identifying the device (D) that is different from the second device (X).

8. Method according to claim 7, **characterized in that** the second message (M4) comprises:
- an upstream identifier (u-i) which is used to create a second chain of bindings.

9. Method according to claim 7 or 8, **characterized in that** the method comprises:
in response to the second message (M4) receiving a third message (M6) from the third device (Y) in the second device (X),
the third message (M6) comprising:
- a source address (IP_Y1) of the third device (Y), and
- a destination address (IP_X2) of the second device (X), whereby the a destination address (IP_X2) has the same value as the source address (IP_X2) of the second device (X).

10. Method according to claim 9, **characterized in that** the third message (M6) comprises at least one of the following:
- an upstream identifier (u-io) which is used to create a second chain of bindings and which was included in the second message (M4),
- an upstream identifier (u-in) identifying a buffer which is used to create a second chain of bindings.

11. Method according to claim 9 or 10, **characterized in that** the method comprises:
using the third message (M6) to create the binding (T1a).

12. Method according to one of the claims 5 to 11, **characterized in that** the method comprises:
sending a response message (M2) from the second device (X) to the first device (S) in response to the first message (M0),
the response message (M2) comprising:
- a source address (IP_X1) of the second device (X), and
- a destination address (IP_S) of the first device (S), whereby the destination address (IP_S) has the same value as the source address (IP_S) of the first device (S).

13. Method according to claim 12, **characterized in that** the response message (M2) comprises at least one of the following:
- an upstream identifier (u-io) which is used to create a second chain of bindings and which was included in the first message (M0),
- an upstream identifier (u-in) identifying a buffer which is used to create a second chain of bindings.

14. Method according to one of the claims 1 to 13, **characterized in that** the chain of bindings is created beginning at the first source device (S).

15. Method according to one of the claims 1 to 14, **characterized in that** a second chain of bindings is created between pairs of source addresses and destination addresses from the first destination device (D) to the first source device (S).

16. Method according to claims 15, **characterized in that** the second chain of bindings is created beginning at the source device (S).

17. Method according to claim 16, **characterized in that** the method comprises:
using buffers in intermediate devices to store a pair of a source address (IP_X1) and of a destination address (IP_S) of the second chain of bindings, and
copying the content of the buffer to an upstream routing table (T1b) after a source address (IP_Y1) is known that is used for forwarding along the second chain of bindings.

18. Method according to claim 17, **characterized in that** the method comprises:
sending a data packet (DP3, DP7, DP13) after the source address (IP_Y) is known,
the data packet (DP3, DP7, DP13) comprising at least one of the following:
- an identifier (u-SN) that is used to find an entry in a routing table of the second chain of bindings,
- an upstream identifier (u-in) identifying a buffer which is used to create a second chain of bindings.

19. Method according to one of the claims 1 to 18, **characterized in that** the method comprises:
modifying the chain of bindings at the side of the destination device (D, Dx) using the same method as for establishing the chain of bindings with the difference that an intermediate device (X) is used instead of the first source device (S) for the establishment of the modified part of the chain of bindings and with the difference that a new destination address (IP_Dx) is used instead of the original destination address (IP_D) of the data flow.

20. Method according to one of the claims 1 to 19, **characterized in that** the method comprises:
sending a signaling message (S30) from the first destination device (D, Dx) or from a second destination device (Dx) that should be used instead of the first destination device (D),
the signaling message (S30) comprising:
- a new destination address (IP_Dx) of the data flow.

21. Method according to claim 20, **characterized in that** the signaling message (S30) comprises at least on of the following:
- an identifier (u-SN) that is used to find an entry in a routing table,
- the IP-address of (IP_D) of the first destination device (D).

22. Method according to claim 20 or 21, **characterized in that** the method comprises:
- after receiving the signaling message (S30) in a receiving device (Z), checking if the receiving device is the appropriate device for redirecting the flow to the new destination address (IP_Dx).

23. Method according to one of the claims 1 to 18, **characterized in that** the method comprises:
modifying the chain of bindings at the side of the source device (S, Sx) using the same method like for establishing the chain of bindings with the difference that the flow is originated by a new source address (IP_Sx) and with the difference that the address of an intermediate device (X) is used as a destination address instead of the original destination address of the flow.

24. Method according to one of the claims 1 to 23, **characterized in that** the method comprises:
sending a signaling message (S40) from the first source device (S, Sx) or from a second source device (Dx) that should be used instead of the first source device (D),
the signaling message (S40) comprising:
- a new source address (IP_Sx) of the data flow.

25. Method according to claim 24, **characterized in that** the signaling message (S40) comprises at least one of the following:
- an identifier (d-SN) that is used to find an entry in a routing table,
- the IP-address of (IP_S) of the first source device (S).

26. Method according to claim 24 or 25, **characterized in that** the method comprises:
- after receiving the signaling message (S40) in a receiving device (X), checking if the receiving device is the appropriate device for receiving and forwarding the flow from the new source address (IP_8x).

27. Method according to one of the claims 23 to 26, **characterized in that** the method comprises:
sending a signaling message (S42) from an intermediate device (X) to the first source device (S, Sx) or to the second source device (Sx) to initiate flow establishment to the intermediate device (X).

28. Method according to one of the preceding claims, **characterized in that** the source identifier is an IP-address.

29. Method according to one of the preceding claims, **characterized in that** the source identifier, a destination identifier and a flow identifier of the first data packet (DP20) are replaced for forwarding.

30. Device (S, X, D) for forwarding data of a data packet (DP20),
comprising:
a receiving unit,
a sending unit,
and a control unit,
**characterized in that** the control unit performs a method according to the steps of the method of claims 1 to 29.

## Patentansprüche

1. Verfahren zum Weiterleiten von Daten eines Datenpakets (DP20), das Folgendes umfasst:
Empfangen eines ersten Datenpakets (DP20),
Verwenden eines Quellenidentifikators (IP_S) des Datenpakets (DP20) zum Weiterleiten der Daten des ersten Datenpakets (DP20) in einem zweiten Datenpaket (DP22),
Anlegen für einen Strom einer Kette von Bindungen zwischen Paaren von Quellenadressen und Zieladressen von einer ersten Quellenvorrichtung (S) zu einer ersten Zielvorrichtung (D), **dadurch gekennzeichnet, dass** das Verfahren Folgendes umfasst:
Ändern mindestens einer Bindung innerhalb der Kette von Bindungen des Stroms, während mindestens eine Bindung innerhalb der Kette von Bindungen des Stroms während der Lebensdauer eines Datenstroms, der durch den Strom modelliert wird, aufrechterhalten wird.

2. Verfahren nach Anspruch 1, **dadurch gekennzeichnet, dass** das erste Datenpaket (DP20) Folgendes umfasst:
- den ersten Quellenidentifikator (IP_S), der die Quelle des ersten Datenpakets (DP20) identifiziert,
- einen ersten Zielidentifikator (IP X1),
wobei das Verfahren ferner Folgendes umfasst:
Bestimmen eines zweiten Zielidentifikators (IP_Y1) durch Verwenden des ersten Quellenidentifikators (IP_S),
wobei der zweite Zielidentifikator (IP_Y1) von dem ersten Identifikator (IP_S) unterschiedlich ist,
wobei das zweite Datenpaket (DP22) Folgendes umfasst:
- den zweiten Zielidentifikator (IP_Y1) zum Identifizieren des Ziels des zweiten Datenpakets (DP22).

3. Verfahren nach Anspruch 2, **dadurch gekennzeichnet, dass** das erste Datenpaket (DP20) Folgendes umfasst:
- einen weiteren Identifikator (d-SN), der einen Übertragungsstrom F(S, D) identifiziert, zu dem das erste Datenpaket (DP20) gehört, wobei das Verfahren ferner Folgendes umfasst:
Bestimmen der zweiten Zieladresse (IP_Y1) durch Verwenden des ersten Quellenidentifikators (IP_S) und des weiteren Identifikators (d-SN).

4. Verfahren nach Anspruch 3, **dadurch gekennzeichnet, dass** das Verfahren Folgendes umfasst:
- Bestimmen eines zweiten weiteren Identifikators (d-SN) durch Verwenden des ersten Quellenidentifikators (IP_S) und des ersten weiteren Identifikators (d-SN), wobei das zweite Datenpaket (DP22) Folgendes umfasst:
- den zweiten weiteren Identifikator (d-SN).

5. Verfahren nach Anspruch 1, **dadurch gekennzeichnet, dass** das Verfahren Folgendes umfasst:
in einer zweiten Vorrichtung (X) Empfangen einer ersten Mitteilung (M0) von einer ersten Vorrichtung (S),
wobei die erste Mitteilung (M0) Folgendes umfasst:
- eine Quellenadresse (IP_S) der ersten Vorrichtung (S),
- eine Zieladresse (IP_D), die eine Vorrichtung (D) identifiziert, die von der zweiten Vorrichtung (X) unterschiedlich ist,
wobei das Verfahren Folgendes umfasst:
in der zweiten Vorrichtung (X) aufgrund der ersten Mitteilung (M0) Initiieren des Anlegens einer Bindung (T1a, IP_S) zwischen der Quellenadresse (IP_S) der ersten Vorrichtung (S) und der Zieladresse (IP_Y1) einer dritten Vorrichtung (Y).

6. Verfahren nach Anspruch 5, **dadurch gekennzeichnet, dass** die erste Mitteilung (M4) Folgendes umfasst:
- einen stromaufwärtigen Identifikator (u-i), der verwendet wird, um eine zweite Kette von Bindungen anzulegen.

7. Verfahren nach Anspruch 5 oder 6, **dadurch gekennzeichnet, dass** das Verfahren Folgendes umfasst:
Senden einer zweiten Mitteilung (M4) von der zweiten Vorrichtung (X) zu einer dritten Vorrichtung (Y) aufgrund der ersten Mitteilung (M0),
wobei die zweite Mitteilung (M4) Folgendes umfasst:
- eine Quellenadresse (IP_X2) der zweiten Vorrichtung (X), und
- die Zieladresse (IP_D), die die Vorrichtung (D) identifiziert, die von der zweiten Vorrichtung (X) unterschiedlich ist.

8. Verfahren nach Anspruch 7, **dadurch gekennzeichnet, dass** die zweite Mitteilung (M4) Folgendes umfasst:
- einen stromaufwärtigen Identifikator (u-i), der verwendet wird, um eine zweite Kette von Bindungen anzulegen.

9. Verfahren nach Anspruch 7 oder 8, **dadurch gekennzeichnet, dass** das Verfahren Folgendes umfasst:
als Reaktion darauf, dass die zweite Mitteilung (M4) eine dritte Mitteilung (M6) von der dritten Vorrichtung (Y) in der zweiten Vorrichtung (X) empfängt, wobei die dritte Mitteilung (M6) Folgendes umfasst:
- eine Quellenadresse (IP_Y1) der dritten Vorrichtung (Y), und
- eine Zieladresse (IP_X2) der zweiten Vorrichtung (X), wobei die Zieladresse (IP_X2) denselben Wert hat wie die Quellenadresse (IP_X2) der zweiten Vorrichtung (X).

10. Verfahren nach Anspruch 9, **dadurch gekennzeichnet, dass** die dritte Mitteilung (M6) Folgendes umfasst:
- einen stromaufwärtigen Identifikator (u-io), der verwendet wird, um eine zweite Kette von Bindungen anzulegen, und der in der zweiten Mitteilung (M4) enthalten war, und/oder
- einen stromaufwärtigen Identifikator (u-in), der einen Pufferspeicher identifiziert, der verwendet wird, um eine zweite Kette von Bindungen anzulegen.

11. Verfahren nach Anspruch 9 oder 10, **dadurch gekennzeichnet, dass** das Verfahren Folgendes umfasst:
Verwenden der dritten Mitteilung (M6) zum Anlegen der Bindung (T1a).

12. Verfahren nach einem der Ansprüche 5 bis 11, **dadurch gekennzeichnet, dass** das Verfahren Folgendes umfasst:
Senden einer Antwortmitteilung (M2) von der zweiten Vorrichtung (X) zu der ersten Vorrichtung (S) als Reaktion auf die erste Mitteilung (M0), wobei die Antwortmitteilung (M2) Folgendes umfasst:
- eine Quellenadresse (IP_X1) der zweiten Vorrichtung (X), und
- eine Zieladresse (IP_S) der ersten Vorrichtung (S),
wobei die Zieladresse (IP_S) denselben Wert hat wie die Quellenadresse (IP_S) der ersten Vorrichtung (S).

13. Verfahren nach Anspruch 12, **dadurch gekennzeichnet, dass** die Antwortmitteilung (M2) Folgendes umfasst:
- einen stromaufwärtigen Identifikator (u-io), der verwendet wird, um eine zweite Kette von Bindungen anzulegen, und der in der ersten Mitteilung (M0) enthalten war, und/oder
- einen stromaufwärtigen Identifikator (u-in), der einen Pufferspeicher identifiziert, der verwendet wird, um eine zweite Kette von Bindungen anzulegen.

14. Verfahren nach einem der Ansprüche 1 bis 13, **dadurch gekennzeichnet, dass** die Kette von Bindungen beginnend an der ersten Quellenvorrichtung (S) angelegt wird.

15. Verfahren nach einem der Ansprüche 1 bis 14, **dadurch gekennzeichnet, dass** eine zweite Kette von Bindungen zwischen Paaren von Quellenadressen und Zieladressen von der ersten Zielvorrichtung (D) zu der ersten Quellenvorrichtung (S) angelegt wird.

16. Verfahren nach Anspruch 15, **dadurch gekennzeichnet, dass** die zweite Kette von Bindungen beginnend an der Quellenvorrichtung (S) angelegt wird.

17. Verfahren nach Anspruch 16, **dadurch gekennzeichnet, dass** das Verfahren Folgendes umfasst:
Verwenden von Pufferspeichern in Zwischenvorrichtungen zum Speichern eines Paares einer Quellenadresse (IP_X1) und einer Zieladresse (IP_S) der zweiten Kette von Bindungen, und
Kopieren des Inhalts des Pufferspeichers zu einer stromaufwärtigen Routingtabelle (T1b), nachdem eine Quellenadresse (IP_Y1), die zum Weiterleiten entlang der zweiten Kette von Bindungen verwendet wird, bekannt ist.

18. Verfahren nach Anspruch 17, **dadurch gekennzeichnet, dass** das Verfahren Folgendes umfasst:
Senden eines Datenpakets (DP3, DP7, DP13), nachdem die Quellenadresse (IP_Y) bekannt ist,
wobei das Datenpaket (DP3, DP7, DP13) Folgendes umfasst:
- einen Identifikator (u-SN), der verwendet wird, um einen Eintrag in einer Routingtabelle der zweiten Kette von Bindungen zu finden, und/oder
- einen stromaufwärtigen Identifikator (u-in), der einen Pufferspeicher identifiziert, der verwendet wird, um eine zweite Kette von Bindungen anzulegen.

19. Verfahren nach einem der Ansprüche 1 bis 18, **dadurch gekennzeichnet, dass** das Verfahren Folgendes umfasst:
Ändern der Kette von Bindungen an der Seite der Zielvorrichtung (D, Dx) unter Verwenden desselben Verfahrens wie für das Einrichten der Kette von Bindungen, mit dem Unterschied, dass eine Zwischenvorrichtung (X) an Stelle der ersten Quellenvorrichtung (S) zum Einrichten des geänderten Teils der Kette von Bindungen verwendet wird, und mit dem Unterschied, dass eine neue Zieladresse (IP_Dx) an Stelle der ursprünglichen Zieladresse (IP_D) des Datenstroms verwendet wird.

20. Verfahren nach einem der Ansprüche 1 bis 19, **dadurch gekennzeichnet, dass** das Verfahren Folgendes umfasst:
Senden einer Signalisierungsmeldung (S30) von der ersten Zielvorrichtung (D, Dx) oder von einer zweiten Zielvorrichtung (Dx), die an Stelle der ersten Zielvorrichtung (D) verwendet werden sollte, wobei die Signalisierungsmeldung (S30) Folgendes umfasst:
- eine neue Zieladresse (IP_Dx) des Datenstroms.

21. Verfahren nach Anspruch 20, **dadurch gekennzeichnet, dass** die Signalisierungsmeldung (S30) Folgendes umfasst:
- einen Identifikator (u-SN), der verwendet wird, um einen Eintrag in eine Routingtabelle zu finden,
- die IP-Adresse der (IP_D) der ersten Zielvorrichtung (D).

22. Verfahren nach Anspruch 20 oder 21, **dadurch gekennzeichnet, dass** das Verfahren Folgendes umfasst:
- nach dem Empfangen der Signalisierungsmeldung (S30) in einer Empfangsvorrichtung (Z), Prüfen, ob die Empfangsvorrichtung die geeignete Vorrichtung zum Umleiten des Stroms zu der neuen Zieladresse (IP_Dx) ist.

23. Verfahren nach einem der Ansprüche 1 bis 18, **dadurch gekennzeichnet, dass** das Verfahren Folgendes umfasst:
Ändern der Kette von Bindungen an der Seite der Quellenvorrichtung (S, Sx) durch Verwenden desselben Verfahrens wie zum Einrichten der Kette von Bindungen mit dem Unterschied, dass der Strom von einer neuen Quellenadresse (IP_Sx) stammt, und mit dem Unterschied, dass die Adresse einer Zwischenvorrichtung (X) als eine Zieladresse an Stelle der ursprünglichen Zieladresse des Stroms verwendet wird.

24. Verfahren nach einem der Ansprüche 1 bis 23, **dadurch gekennzeichnet, dass** das Verfahren Folgendes umfasst:
Senden einer Signalisierungsmeldung (S40) von der ersten Quellenvorrichtung (S, Sx) oder von einer zweiten Quellenvorrichtung (Dx), die an Stelle der ersten Quellenvorrichtung (D) verwendet werden sollte,
wobei die Signalisierungsmeldung (S40) Folgendes umfasst:
- eine neue Quellenadresse (IP_Sx) des Datenstroms.

25. Verfahren nach Anspruch 24, **dadurch gekennzeichnet, dass** die Signalisierungsmeldung (S40) Folgendes umfasst:
- einen Identifikator (d-SN), der verwendet wird, um einen Eintrag in eine Routingtabelle zu finden, und/oder
- eine IP-Adresse (IP_S) der ersten Quellenvorrichtung (S).

26. Verfahren nach Anspruch 24 oder 25, **dadurch gekennzeichnet, dass** das Verfahren Folgendes umfasst:
- nach dem Empfangen der Signalisierungsmeldung (S40) in einer Empfangsvorrichtung (X), Prüfen, ob die Empfangsvorrichtung die geeignete Vorrichtung zum Empfangen und Weiterleiten des Stroms von der neuen Quellenadresse (IP_Sx) ist.

27. Verfahren nach einem der Ansprüche 23 bis 26, **dadurch gekennzeichnet, dass** das Verfahren Folgendes umfasst:
Senden einer Signalisierungsmeldung (S42) von einer Zwischenvorrichtung (X) zu der ersten Quellenvorrichtung (S, Sx) oder zu der zweiten Quellenvorrichtung (Sx), um die Stromeinrichtung zu der Zwischenvorrichtung (X) zu initiieren.

28. Verfahren nach einem der vorhergehenden Ansprüche, **dadurch gekennzeichnet, dass** der Quellenidentifikator eine IP-Adresse ist.

29. Verfahren nach einem der vorhergehenden Ansprüche, **dadurch gekennzeichnet, dass** der Quellenidentifikator, ein Zielidentifikator und ein Stromidentifikator des ersten Datenpakets (DP20) zum Weiterleiten ersetzt werden.

30. Vorrichtung (S, X, D) zum Weiterleiten von Daten eines Datenpakets (DP20),
die Folgendes umfasst:
eine Empfangseinheit,
eine Sendeeinheit
und eine Steuereinheit,
**dadurch gekennzeichnet, dass** die Steuereinheit ein Verfahren nach einem der Schritte des Verfahrens der Ansprüche 1 bis 29 ausführt.

## Revendications

1. Un procédé de transmission de données d'un paquet de données (DP20), comprenant:
la réception d'un premier paquet de données (DP20),
l'utilisation d'un identifiant source (IP_S) du paquet de données (DP20) de façon à transmettre les données du premier paquet de données (DP20) dans un deuxième paquet de données (DP22),
la création pour un flux d'une chaîne de liaisons entre des paires d'adresses source et d'adresses de destination à partir d'un premier dispositif source (S) vers un premier dispositif de destination (D),
**caractérisé en ce que** le procédé comprend:
la modification d'au moins une liaison à l'intérieur de la chaîne de liaisons du flux tout en conservant au moins une liaison à l'intérieur de la chaîne de liaisons du flux au cours de la durée de vie d'un train de données qui est modélisé par le flux.

2. Le procédé selon la revendication 1, **caractérisé en ce que** le premier paquet de données (DP20) comprend :
- le premier identifiant source (IP_S) qui identifie la source du premier paquet de données (DP20),
- un premier identifiant de destination (IP_X1),
le procédé comprenant en outre:
la détermination d'un deuxième identifiant de destination (IP_Y1) au moyen du premier identifiant source (IP_S),
le deuxième identifiant de destination (IP_Y1) étant différent du premier identifiant (IP_S),
le deuxième paquet de données (DP22) comprenant:
- le deuxième identifiant de destination (IP_Y1) destiné à l'identification de la destination du deuxième paquet de données (DP22).

3. Le procédé selon la revendication 2, **caractérisé en ce que** le premier paquet de données (DP20) comprend :
- un autre identifiant (d-SN) qui identifie un flux de transmission F(S, D) auquel le premier paquet de données (DP20) appartient,
le procédé comprenant en outre:
la détermination de la deuxième adresse de destination (IP_Y1) au moyen du premier identifiant source (IP_S) et de l'autre identifiant (d-SN).

4. Le procédé selon la revendication 3, **caractérisé en ce que** le procédé comprend :
- la détermination d'un deuxième autre identifiant (d-SN) au moyen du premier identifiant source (IP_S) et du premier autre identifiant (d-SN),
le deuxième paquet de données (DP22) comprenant:
- le deuxième autre identifiant (d-SN).

5. Le procédé selon la revendication 1, **caractérisé en ce que** le procédé comprend :
dans un deuxième dispositif (X), la réception d'un premier message (M0) provenant d'un premier dispositif (S),
le premier message (M0) comprenant:
- une adresse source (IP_S) du premier dispositif (S),
- une adresse de destination (IP_D) identifiant un dispositif (D) qui est différent du deuxième dispositif (X),
le procédé comprenant:
dans le deuxième dispositif (X), du fait du premier message (M0), le démarrage de la création d'une liaison (T1a, IP_S) entre l'adresse source (IP_S) du premier dispositif (S) et l'adresse de destination (IP_Y1) d'un troisième dispositif (Y).

6. Le procédé selon la revendication 5, **caractérisé en ce que** le premier message (M4) comprend :
- un identifiant amont (u-i) qui est utilisé de façon à créer une deuxième chaîne de liaisons.

7. Le procédé selon la revendication 5 ou 6, **caractérisé en ce que** le procédé comprend :
l'envoi d'un deuxième message (M4) à partir du deuxième dispositif (X) vers un troisième dispositif (Y) du fait du premier message (M0),
le deuxième message (M4) comprenant:
- une adresse source (IP_X2) du deuxième dispositif (X), et
- l'adresse de destination (IP_D) identifiant le dispositif (D) qui est différent du deuxième dispositif (X).

8. Le procédé selon la revendication 7, **caractérisé en ce que** le deuxième message (M4) comprend :
- un identifiant amont (u-i) qui est utilisé de façon à créer une deuxième chaîne de liaisons.

9. Le procédé selon la revendication 7 ou 8, **caractérisé en ce que** le procédé comprend :
en réponse au deuxième message (M4), la réception d'un troisième message (M6) provenant du troisième dispositif (Y) dans le deuxième dispositif (X),
le troisième message (M6) comprenant:
- une adresse source (lP_Y1) du troisième dispositif (Y), et
- une adresse de destination (IP_X2) du deuxième dispositif (X), l'adresse de destination (IP_X2) possédant la même valeur que l'adresse source (IP_X2) du deuxième dispositif (X).

10. Le procédé selon la revendication 9, **caractérisé en ce que** le troisième message (M6) comprend au moins un des éléments suivants:
- un identifiant amont (u-io) qui est utilisé de façon à créer une deuxième chaîne de liaisons et qui a été inclus dans le deuxième message (M4),
- un identifiant amont (u-in) identifiant une mémoire tampon qui est utilisée de façon à créer une deuxième chaîne de liaisons.

11. Le procédé selon la revendication 9 ou 10, **caractérisé en ce que** le procédé comprend :
l'utilisation du troisième message (M6) de façon à créer la liaison (T1a).

12. Le procédé selon l'une quelconque des revendications 5 à 11, **caractérisé en ce que** le procédé comprend:
l'envoi d'un message en réponse (M2) du deuxième dispositif (X) vers le premier dispositif (S) en réponse au premier message (M0), le message en réponse (M2) comprenant:
- une adresse source (IP_X1) du deuxième dispositif (X), et
- une adresse de destination (IP_S) du premier dispositif (S), l'adresse de destination (IP_S) possédant la même valeur que l'adresse source (IP_S) du premier dispositif (S).

13. Le procédé selon la revendication 12, **caractérisé en ce que** le message en réponse (M2) comprend au moins un des éléments suivants:
- un identifiant amont (u-io) qui est utilisé de façon à créer une deuxième chaîne de liaisons et qui a été inclus dans le premier message (M0),
- un identifiant amont (u-in) identifiant une mémoire tampon qui est utilisée de façon à créer une deuxième chaîne de liaisons.

14. Le procédé selon l'une quelconque des revendications 1 à 13, **caractérisé en ce que** la chaîne de liaisons est créée en commençant par le premier dispositif source (S).

15. Le procédé selon l'une quelconque des revendications 1 à 14, **caractérisé en ce qu'**une deuxième chaîne de liaisons est créée entre des paires d'adresses source et d'adresses de destination du premier dispositif de destination (D) vers le premier dispositif source (S).

16. Le procédé selon la revendication 15, **caractérisé en ce que** la deuxième chaîne de liaisons est créée en commençant par le dispositif source (S).

17. Le procédé selon la revendication 16, **caractérisé en ce que** le procédé comprend :
l'utilisation de mémoires tampons dans des dispositifs intermédiaires destinées à conserver en mémoire une paire d'une adresse source (IP_X1) et d'une adresse de destination (IP_S) de la deuxième chaîne de liaisons, et
la copie du contenu de la mémoire tampon vers une table de routage amont (T1b) une fois une adresse source (IP_Y1) connue qui est utilisée de façon à transmettre le long de la deuxième chaîne de liaisons.

18. Le procédé selon la revendication 17, **caractérisé en ce que** le procédé comprend :
l'envoi d'un paquet de données (DP3, DP7, DP13) une fois l'adresse source (IP_Y) connue,
le paquet de données (DP3, DP7, DP13) comprenant au moins un des éléments suivants:
- un identifiant (u-SN) qui est utilisé de façon à trouver une entrée dans une table de routage de la deuxième chaîne de liaisons,
- un identifiant amont (u-in) identifiant une mémoire tampon qui est utilisée de façon à créer une deuxième chaîne de liaisons.

19. Le procédé selon l'une quelconque des revendications 1 à 18, **caractérisé en ce que** le procédé comprend:
la modification de la chaîne de liaisons au niveau du côté du dispositif de destination (D, Dx) au moyen du même procédé que celui utilisé pour l'établissement de la chaîne de liaisons à la différence qu'un dispositif intermédiaire (X) est utilisé à la place du premier dispositif source (S) pour l'établissement de la partie modifiée de la chaîne de liaisons et à la différence qu'une nouvelle adresse de destination (IP_Dx) est utilisée à la place de l'adresse de destination d'origine (IP_D) du flux de données.

20. Le procédé selon l'une quelconque des revendications 1 à 19, **caractérisé en ce que** le procédé comprend:
l'envoi d'un message de signalisation (S30) à partir du premier dispositif de destination (D, Dx) ou à partir d'un deuxième dispositif de destination (Dx) qui devrait être utilisé à la place du premier dispositif de destination (D),
le message de signalisation (S30) comprenant:
- une nouvelle adresse de destination (IP_Dx) du flux de données.

21. Le procédé selon la revendication 20, **caractérisé en ce que** le message de signalisation (S30) comprend au moins un des éléments suivants:
- un identifiant (u-SN) qui est utilisé de façon à trouver une entrée dans une table de routage,
- l'adresse IP (IP_D) du premier dispositif de destination (D).

22. Le procédé selon la revendication 20 ou 21, caractérisé
- après la réception du message de signalisation (S30) dans un dispositif de réception (Z), la vérification si le dispositif de réception est le dispositif approprié pour une redirection du flux vers la nouvelle adresse de destination (IP_Dx).

23. Le procédé selon l'une quelconque des revendications 1 à 18, **caractérisé en ce que** le procédé comprend:
la modification de la chaîne de liaisons au niveau du côté du dispositif source (S, Sx) au moyen du même procédé que celui utilisé pour l'établissement de la chaîne de liaisons à la différence que le flux provient d'une nouvelle adresse source (IP_Sx) et à la différence que l'adresse d'un dispositif intermédiaire (X) est utilisée en tant qu'adresse de destination à la place de l'adresse de destination d'origine du flux.

24. Le procédé selon l'une quelconque des revendications 1 à 23, **caractérisé en ce que** le procédé comprend:
l'envoi d'un message de signalisation (S40) à partir du premier dispositif source (S, Sx) ou à partir d'un deuxième dispositif source (Dx) qui devrait être utilisé à la place du premier dispositif source (D), le message de signalisation (S40) comprenant:
- un nouvelle adresse source (IP_Sx) du flux de données.

25. Le procédé selon la revendication 24, **caractérisé en ce que** le message de signalisation (S40) comprend au moins un des éléments suivants:
- un identifiant (d-SN) qui est utilisé de façon à trouver une entrée dans une table de routage,
- l'adresse IP (IP_S) du premier dispositif source (S).

26. Le procédé selon la revendication 24 ou 25, **caractérisé en ce que** le procédé comprend:
- après la réception du message de signalisation (S40) dans un dispositif de réception (X), la vérification si le dispositif de réception est le dispositif approprié pour la réception et la transmission du flux à partir de la nouvelle adresse source (IP_Sx).

27. Le procédé selon l'une quelconque des revendications 23 à 26, **caractérisé en ce que** le procédé comprend:
l'envoi d'un message de signalisation (S42) d'un dispositif intermédiaire (X) vers le premier dispositif source (S, Sx) ou
vers le deuxième dispositif source (Sx) de façon à démarrer l'établissement d'un flux vers le dispositif intermédiaire (X).

28. Le procédé selon l'une quelconque des revendications précédentes, **caractérisé en ce que** l'identifiant source est une adresse IP.

29. Le procédé selon l'une quelconque des revendications précédentes, **caractérisé en ce que** l'identifiant source, un identifiant de destination et un identifiant de flux du premier paquet de données (DP20) sont remplacés en vue d'une transmission.

30. Un dispositif (S, X, D) de transmission de données d'un paquet de données (DP20),
comprenant:
une unité de réception,
une unité d'envoi,
et une unité de commande,
**caractérisé en ce que** l'unité de commande exécute un procédé selon les étapes du procédé des revendications 1 à 29.
